# EUROPEAN PATENT APPLICATION

(11) **EP 4 586 718 A1**
(43) Date of publication of application: **16.07.2025**
(21) Application number: 23862898.6
(22) Date of filing: 17.08.2023
(51) Int. Cl.: H04W 72/0446, H04W 72/02

(54) **COMMUNICATION DEVICE, COMMUNICATION METHOD, AND COMMUNICATION SYSTEM**

(30) Priority: 09.09.2022 JP 2022143975
(71) Applicant: Sony Group Corporation, Tokyo 108-0075 (JP)
(72) Inventor: KUSASHIMA, Naoki, Tokyo 108-0075 (JP); SHIMEZAWA, Kazuyuki, Tokyo 108-0075 (JP); UCHIYAMA, Hiromasa, Tokyo 108-0075 (JP)
(74) Representative: Witte, Weller & Partner Patentanwälte mbB
(86) International application number: PCT/JP2023/029718
(87) International publication number: WO 2024/053358

(57) **Abstract**

A communication device of the present disclosure includes a control unit. The control unit selects, from a plurality of slot configurations and/or a plurality of symbol configurations, a configuration of a slot and/or a symbol to be used for communication with another communication device. The control unit communicates with the other communication device using the selected slot configuration and/or the selected symbol configuration.

## Description

### Field

The present disclosure relates to a communication device, a communication method, and a communication system. Background

Wireless access schemes and wireless networks for cellular mobile communication (hereinafter, also referred to as "Long Term Evolution (LTE)", "LTE-Advanced (LTE-A)", "LTE-Advanced Pro (LTE-A Pro)", "New Radio (NR)", "New Radio Access Technology (NRAT)", "Evolved Universal Terrestrial Radio Access (EUTRA)", or "Further EUTRA (FEUTRA)") have been studied in the 3rd Generation Partnership Project (3GPP (registered trademark)). Note that, in the following explanation, the LTE includes LTE-A, LTE-A Pro, and EUTRA and the NR includes NRAT and FEUTRA. In the LTE and the NR, a base station device (a base station) is also referred to as eNodeB (evolved NodeB) and a terminal device (a mobile station, a mobile station device, and a terminal) is also referred to as UE (User Equipment). The LTE and the NR are cellular communication systems in which a plurality of areas covered by a base station device are arranged in a cell shape. A single base station device may manage a plurality of cells.

Studies on various technical problems and the like have been started for Beyond5G and further for 6G (sixth-generation mobile communication system). In the 6G, for example, a lower delay shorter than 1 millisecond, which is a requirement of the 5G, is required. As a specific example of the requirement of the 6G, it is assumed that a request in which an E2E (End to End) delay is 1 millisecond or less is required.

### Citation List

### Non Patent Literature

Non Patent Literature 1: NTT DOCOMO, INC., "5G sophistication and 6G", [online], [searched on June 15, 2022], Internet <URL: https://www.nttdocomo.co.jp/binary/pdf/corporate/technology /whitepaper_6g/DOCOMO_6G_White_PaperJP_20211108.pdf> Summary

### Technical Problem

As explained above, in the 6G, a lower delay is required.

Therefore, the present disclosure provides a mechanism that can implement communication with a lower delay.

Note that the problem or the object described above are merely one of a plurality of problems or objects that can be solved or achieved by a plurality of embodiments disclosed in the present specification. Solution to Problem

A communication device of the present disclosure includes a control unit. The control unit selects, from a plurality of slot configurations and/or a plurality of symbol configurations, a configuration of a slot and/or a symbol to be used for communication with another communication device. The control unit communicates with the other communication device using the selected slot configuration and/or the selected symbol configuration.

### Brief Description of Drawings

FIG. 1 is a diagram for explaining a radio frame.
FIG. 2 is a table for explaining a setting example of a subcarrier spacing.
FIG. 3 is a diagram illustrating an example of a resource grid.
FIG. 4 is a diagram illustrating an example of a bandwidth part.
FIG. 5 is a diagram illustrating an example of a slot format.
FIG. 6 is a diagram illustrating an example of a slot format.
FIG. 7 is a diagram illustrating an example of a topology of 6G.
FIG. 8 is a diagram illustrating a relation between a cellular communication standard and a supported frequency.
FIG. 9 is a diagram illustrating an example of a mismatch between a slot period and a traffic period.
FIG. 10 is a diagram illustrating an example of HARQ process exhaustion due to a high round-trip delay.
FIG. 11 is a diagram illustrating an example of schedule restriction by a slot boundary.
FIG. 12 is a diagram illustrating an example of a symbol length at a subcarrier spacing of 30 kHz.
FIG. 13 is a diagram illustrating an example of an overall configuration of a communication system according to an embodiment of the present disclosure.
FIG. 14 is a diagram illustrating a configuration example of a base station device according to the embodiment of the present disclosure.
FIG. 15 is a diagram illustrating a configuration example of a terminal device according to the embodiment of the present disclosure.
FIG. 16 is a diagram illustrating an example of a different slot configuration according to the embodiment of the present disclosure.
FIG. 17 is a table illustrating an example of subcarrier spacing setting according to the embodiment of the present disclosure.
FIG. 18 is a table illustrating another example of the subcarrier spacing setting according to the embodiment of the present disclosure.
FIG. 19 is a diagram illustrating another example of the different slot configuration according to the embodiment of the present disclosure.
FIG. 20 is a diagram illustrating another example of the different slot configuration according to the embodiment of the present disclosure.
FIG. 21 is a table illustrating an example of slot setting according to the embodiment of the present disclosure.
FIG. 22 is a diagram illustrating an example of system information notification of which is provided by the base station device according to the embodiment of the present disclosure.
FIG. 23 is a diagram illustrating an example of dedicated RRC signaling notification of which is provided by the base station device according to the embodiment of the present disclosure.
FIG. 24 is a diagram illustrating another example of the dedicated RRC signaling notification of which is provided by the base station device according to the embodiment of the present disclosure.
FIG. 25A is a diagram illustrating another example of the dedicated RRC signaling notification of which is provided by the base station device according to the embodiment of the present disclosure.
FIG. 25B is a diagram illustrating another example of the dedicated RRC signaling notification of which is provided by the base station device according to the embodiment of the present disclosure.
FIG. 26 is a diagram for explaining an example of a setting notification method using a period of an SSB by the base station device according to the embodiment of the present disclosure.
FIG. 27 is a diagram for explaining an example of a setting notification method using a detection timing of an SSB by the base station device according to the embodiment of the present disclosure.
FIG. 28 is a sequence chart illustrating an example of a flow of communication processing according to the embodiment of the present disclosure.
FIG. 29 is a sequence chart illustrating another example of the flow of the communication processing according to the embodiment of the present disclosure.
FIG. 30 is a sequence chart illustrating another example of the flow of the communication processing according to the embodiment of the present disclosure. Description of Embodiments

An embodiment of the present disclosure is explained in detail below with reference to the accompanying drawings. Note that, in the present specification and the drawings, components having substantially the same functional configurations are denoted by the same reference numerals and signs, whereby redundant explanation of the components is omitted.

In the present specification and the drawings, similar components in the embodiment are sometimes distinguished by adding different alphabets or numbers after the same reference numerals. However, when it is not particularly necessary to distinguish each of similar constituent elements, only the same reference number is added.

Each of one or more embodiments (including, examples, modifications, and application examples) explained below can be implemented independently. On the other hand, at least a part of a plurality of embodiments explained below may be implemented in combination with at least a part of other embodiments as appropriate. These plurality of embodiments can include new characteristics different from one another. Therefore, these plurality of embodiments can contribute to solving objects or problems different from one another and can achieve effects different from one another.

### <<1. Introduction>>

A preferred embodiment of the present disclosure is explained in detail below with reference to the accompanying drawings. Note that, in the present specification and the drawings, components having substantially the same functional configurations are denoted by the same reference numerals and signs, whereby redundant explanation of the components is omitted. Unless specifically clearly described otherwise, techniques, functions, methods, configurations, procedures, and all other descriptions explained below are applicable to LTE, NR (5G), and 6G.

### <1.1. Related art>

### [Wireless communication system]

A wireless communication system includes at least a base station device (not illustrated) and a terminal device (not illustrated). The base station device can store a plurality of terminal devices. The base station device can be connected to other base station devices one another by means of an X2 interface.

The base station device can be connected to an EPC (Evolved Packet Core) by means of an S1 interface. Further, the base station device can be connected to an MME (Mobility Management Entity) by means of an S1-MME interface. The base station device can be connected to an S-GW (Serving Gateway) by means of an S1-U interface.

The S1 interface supports a many-to-many connection between the MME and/or the S-GW and the base station device. In the present embodiment, each of the base station device and the terminal device supports at least one of LTE, NR (5G), and 6G.

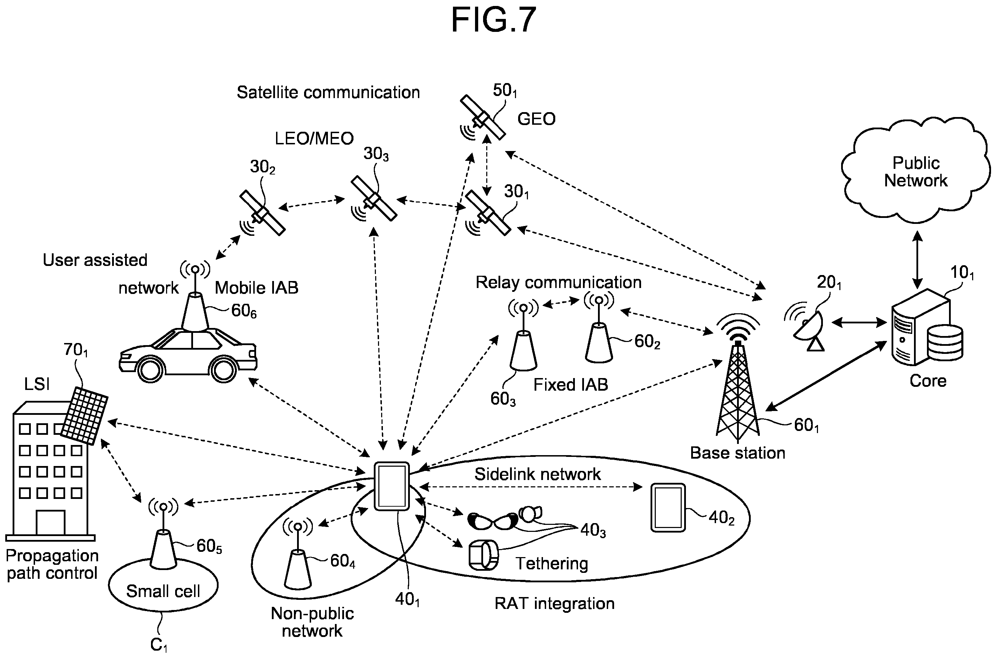

Note that details of the wireless communication system according to the present embodiment are explained below with reference to FIG. 7 and the like.

### [Frame configuration]

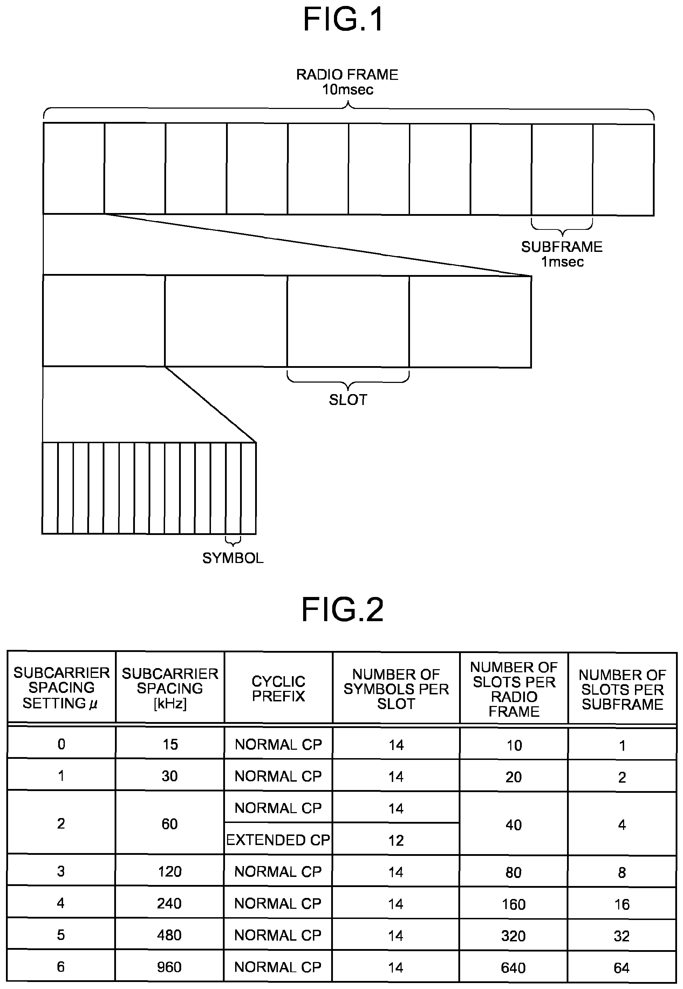

FIG. 1 is a diagram for explaining a radio frame. As illustrated in FIG. 1, in the NR, for example, a radio frame consisting of 10 ms (milliseconds) is defined. Each radio frame consists of two half frames. A time interval of the half frames is 5 ms. Each of the half frames consists of five subframes.

A time interval of the subframes is 1 ms. Further, one subframe consists of one or more slots. A time interval of the slots is different depending on a numerology (or an OFDM numerology). The numerology is specified by a combination of a subcarrier spacing (SCS) and a cyclic prefix (CP).

FIG. 2 is a table for explaining a setting example of the subcarrier spacing. The subcarrier spacing supported by the NR is specified by, for example, a power of 2 based on 15 kHz (kilohertz).

Specifically, as the subcarrier spacing, 15 kHz, 30 kHz, 60 kHz, 120 kHz, 240 kHz, 480 kHz, and 960 kHz are supported. The time interval of the slots are 1 ms, 0.5 ms, 0.25 ms, 0.125 ms, 0.0625 ms, 0.03125 ms, and 0.015625 ms respectively for subcarrier spacings of 15 kHz, 30 kHz, 60 kHz, 120 kHz, 240 kHz, 480 kHz, and 960 kHz. One slot consists of fourteen symbols in the case of a normal CP and consists of twelve symbols in the case of an extended CP.

### [Resource grid]

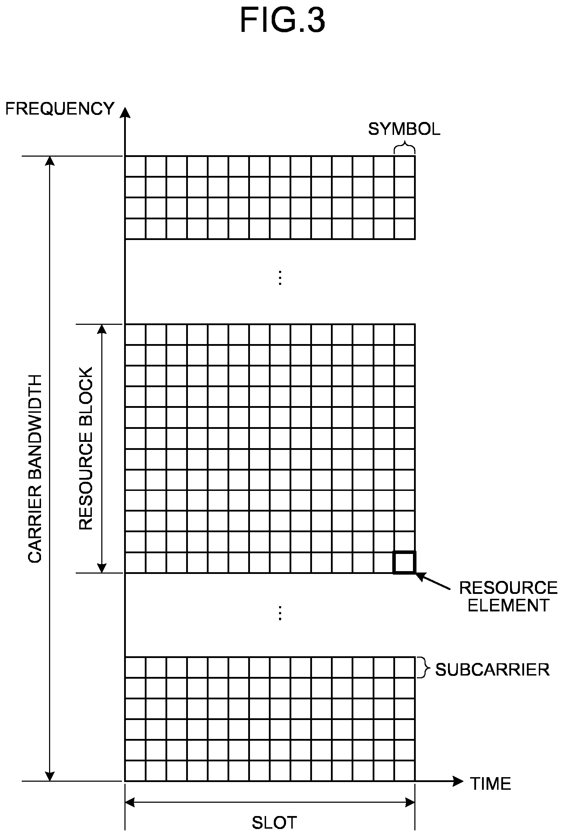

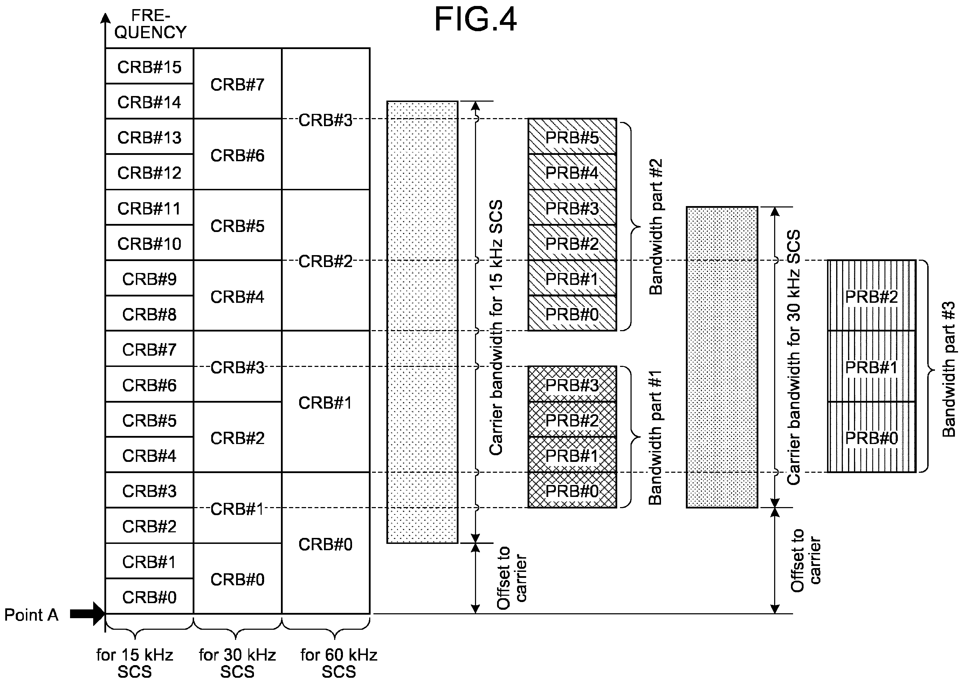

FIG. 3 is a diagram illustrating an example of a resource grid. FIG. 4 is a diagram illustrating an example of a bandwidth part.

In the NR, in each numerology and each carrier, a physical signal or a physical channel to be transmitted can be expressed by, for example, a resource grid illustrated in FIG. 3. The resource grid is defined by a plurality of resource elements. One resource element in a predetermined antenna port is expressed by one subcarrier and one symbol. An index of the resource element in the predetermined antenna port can be represented by a combination of a subcarrier index and a symbol index.

In the NR, for example, as illustrated in FIG. 4, a resource block that is a unit on a frequency axis is defined. One resource block (RB or physical resource block: PRB) consists of twelve consecutive subcarriers on the frequency axis. As the resource block, there are a common resource block (CRB), a physical resource block (PRB), and a virtual resource block (VRB).

The common resource block is a resource block defined by a predetermined bandwidth and a predetermined numerology. In all numerologies, the common resource block is started from a Point A (see FIG. 4). A frequency designated by the point A is the center of a subcarrier #0 of a common resource block #0 in all the numerologies.

The physical resource block is a resource block defined in a predetermined bandwidth part. The physical resource block index is numbered from 0 within the predetermined bandwidth part. The virtual resource block is a logical resource block and is used when a pre-coded signal of a PDSCH or a PUSCH is mapped to a physical resource block.

In the NR, a subset of consecutive common resource blocks referred to as bandwidth part (BWP) can be set. The bandwidth part using the predetermined numerology fits in a bandwidth of a carrier defined by the numerology. A maximum of four bandwidth parts are set for each terminal device. At a predetermined time, there is one active bandwidth part.

The terminal device does not expect to receive a PDSCH, a PDCCH, and a CSI-RS outside a downlink active bandwidth part. The terminal device does not transmit a PUSCH and a PUCCH outside the uplink active bandwidth part. In a predetermined active cell, the terminal device does not transmit an SRS outside the uplink active bandwidth part.

### [Slot format]

In a TDD cell (Unpaired spectrum), each of fourteen symbols in a slot can be classified into any of a downlink (DL or D) state, an uplink (UL or U) state, and a flexible (F) state.

A downlink symbol can be used for reception of the terminal device. An uplink symbol can be used for transmission of the terminal device. A flexible symbol can be used for transmission or reception of the terminal device. The flexible symbol can be utilized as a downlink and uplink switching period or guard period.

States of these symbols are designated by TDD configuration information common to terminal devices (TDD-UL-DL-ConfigCommon), TDD configuration information for individual terminal devices (TDD-UL-DL-ConfigDedicaated), and/or a slot format index carried by a DCI.

The TDD configuration information common to the terminal devices includes information concerning the number of downlink slots and downlink symbols, the number of uplink slots and uplink symbols, and an uplink/downlink switching period. The TDD configuration information common to the terminal devices includes information concerning all downlinks (all DLs), all uplinks (all ULs), or the number of downlink symbols and the number of uplink symbols for the symbols.

The slot format index is an index of a slot format representing a combination of states of fourteen symbols and is designated in units of slots. A format indicating the slot format is also referred to as slot format indicator (SFI).

The uplink and the downlink can be flexibly switched in units of symbols by the TDD configuration or the slot format.

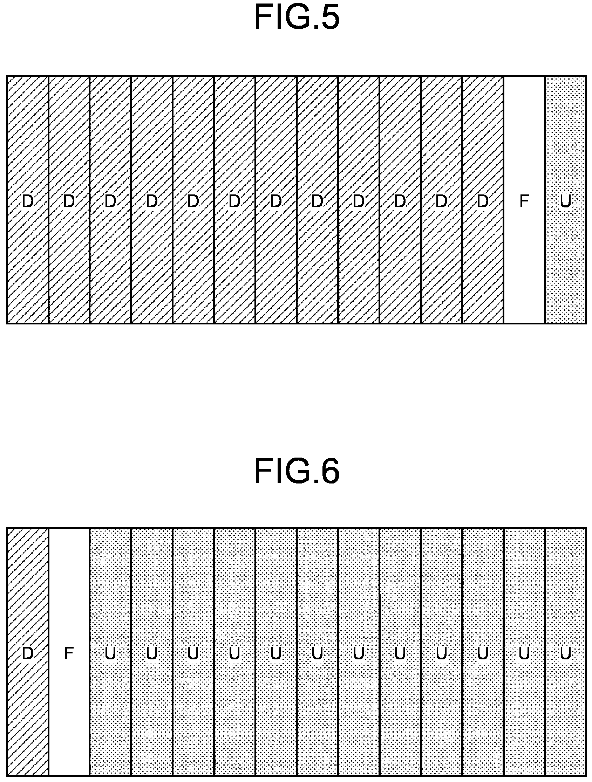

FIG. 5 and FIG. 6 are diagrams illustrating an example of the slot format. In FIG. 5, first to twelfth symbols are downlink symbols, a thirteenth symbol is a flexible symbol, and a fourteenth symbol is an uplink symbol. The SFI of this slot represents "DDDDDDDDDDDDFU" in order from the head symbol of the slot. Accordingly, transmission and reception of HARQ-ACK corresponding to a PDSCH can be performed in the same slot.

In FIG. 6, the first symbol is a downlink symbol, the second symbol is a flexible symbol, and the third to fourteenth symbols are uplink symbols. An SFI of this slot represents "DFUUUUUUUUUUUU" in order from a symbol of the slot. Accordingly, transmission and reception of a PUSCH corresponding to a UL grant can be performed in the same slot.

### <1.2. Overview of 6G>

### [Requirement of the 6G]

As explained above, in the 6G, a lower delay shorter than 1 millisecond, which is a requirement of the 5G, is required. As a specific example of the requirement of the 6G, it is assumed that a request with an E2E (End to End) delay of 1 millisecond or less is required. As another specific example of the requirement of the 6G, there is a request for reducing a radio delay to 0.1 milliseconds.

### [Communication topology of 6G]

FIG. 7 is a diagram illustrating an example of a communication topology of the 6G.

From 1G to 3G, communication between a macro cell deployed by the base station device 60₁ mainly installed on the ground and a terminal device 40₁ has been studied.

From 4G, communication other than the communication between the base station device 60₁ and the terminal device 40₁ has started to be studied. For example, in the 4G, a small cell C₁ that is a cell having a coverage smaller than that of the macro cell has been introduced. In the example illustrated in FIG. 7, the small cell C₁ is formed by a base station device 60₅. In the 4G, for example, communication of fixed relay station devices (IAB: Integrated Access and Backhaul) 60₂ and 60₃, communication between terminal devices 40₁ and 40₂ using a sidelink, and the like have been introduced.

In the 5G, for example, satellite station communication (NTN: Non-Terrestrial Network) for communicating with satellite stations 50₁ and 30₁ to 30₃ such as a geostationary orbit (GEO) satellite, a middle earth orbit (MEO) satellite, and a low earth orbit (LEO) satellite has been introduced. In the 5G, for example, a non-public network (NPN) has been introduced. In the example illustrated in FIG. 7, the non-public network is provided by a base station device 60₄.

In the 6G, it is expected to further support various communication topologies. In addition to the communication topologies introduced up to the 5G, for example, it is expected that propagation path control using a LIS (Large Intelligent Surface, Reconfigurable Intelligent Surface) 70₁ is introduced. In the 6G, it is expected that support for communication between terminal devices (tethering) between a wearable terminal 40₃ using a sidelink and the terminal device 40₁ such as a smartphone is further introduced. Further, in the 6G, it is expected that communication of a mobile relay station device (a Mobile IAB) 60₆ and the like is further introduced.

In the 6G, communication in a high frequency band such as a millimeter wave or a terahertz wave is required in order to support higher-speed communication.

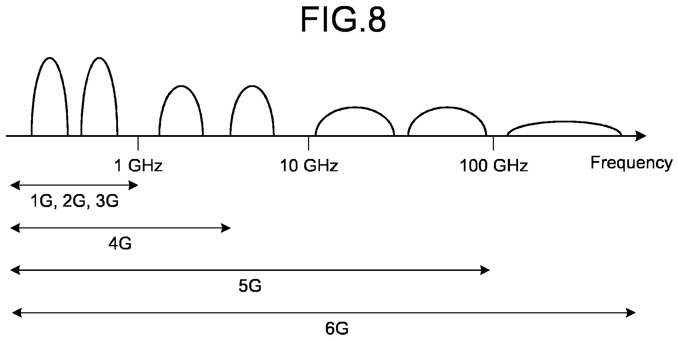

FIG. 8 is a diagram illustrating a relation between a cellular communication standard and a supported frequency. Up to the 3G, frequencies in a microwave band of 1 GHz or less were mainly supported. From the 4G, frequencies of up to 6 GHz or less were supported. From the 5G, it is expected that, from Rel-15, frequencies up to 52.6 GHz or less are supported, from Rel-17, frequencies up to 71 GHz or less are supported, and, in future, frequencies up to 100 GHz including millimeter waves are supported.

In the 6G, it is expected that frequencies of 100 GHz or more including a terahertz wave band are supported. In communication in a high frequency band such as a millimeter wave or a terahertz wave, application of a high subcarrier spacing or a single carrier is considered in order to mitigate the influence of phase noise or a frequency offset error. For example, in the NR, a high subcarrier spacing up to 960 kHz was supported in order to support communication in a high frequency band. In order to implement more efficient communication in a high frequency band, operation by a single carrier is also studied.

### <1.3. Problems>

In the NR, low delay and millimeter wave support have been performed by changing a subcarrier spacing (SCS or a numerology). Specifically, at a low frequency, a symbol length and a slot length are reduced to 1/4 by changing a subcarrier spacing of 15 kHz to a subcarrier spacing of 60 kHz. For that reason, it has been possible to cope with low-delay communication. In the millimeter wave, by changing a subcarrier spacing to a maximum 960 kHz, resistance to phase noise, a Doppler shift, and a frequency offset error has been successfully increased and implementation has been successfully simplified.

On the other hand, the subcarrier spacing is a value determined not only by a request for communication delay but also by a communication environment and a frequency band as explained above. Therefore, it is sometimes difficult to meet the requirement of the 6G only by changing the subcarrier spacing.

Further, in the NR, a slot length and a slot period are determined according to a subcarrier spacing set by a power of 2 based on a radio frame having length of 10 milliseconds and a subframe having length of 1 millisecond. Boundaries of radio frames are configured to be aligned even at different subcarrier spacings. As explained above, since the slot period and the position of the slot boundary are fixed, various problems can occur.

Here, an example of a problem due to an existing slot configuration is explained while enumerating specific examples.

### <1.3.1. First problem>

A first problem is a mismatch between a slot period and a traffic period.

In XR (AR (Augmented Reality)/VR (Virtual Reality)/MR (Mixed Reality)), for example, periodic image data of 60 fps (frame per second) or 120 fps is transmitted. A traffic period is approximately 16.67 milliseconds at 60 fps and is approximately 8.33 milliseconds at 120 fps and is generally defined by a non-integer period.

On the other hand, in the NR, a configured grant (CG), SPS (Semi-Persistent Scheduling), C-DRX (Connected Discontinuous Reception), and the like are set in units of slots and the slots are defined by an integer period. Therefore, an error after the decimal point occurs between the slot period and the traffic period. This error occurs every time traffic occurs.

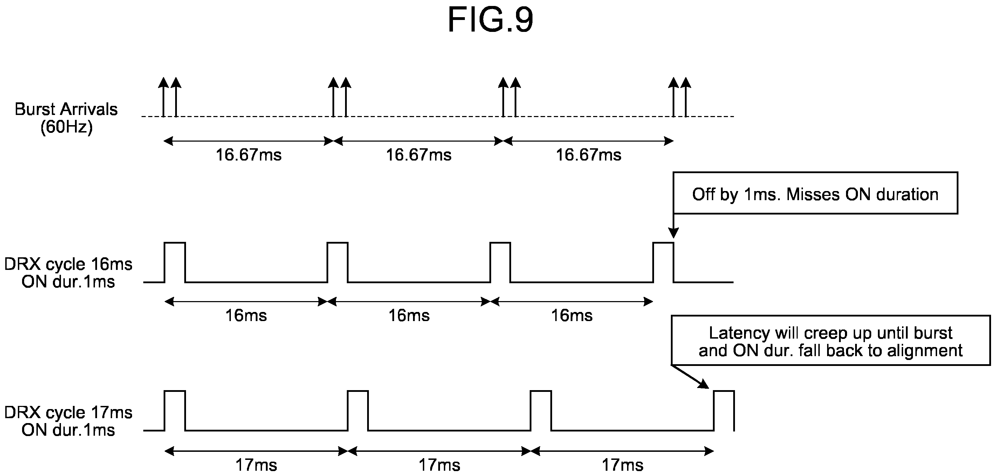

FIG. 9 is a diagram illustrating an example of a mismatch between the slot period and the traffic period. FIG. 9 illustrates an example of a case in which traffic arrives at 60 fps (60 Hz). In this case, traffic arrives at a period of approximately 16.67 milliseconds.

Here, the terminal device 40 sets C-DRX to not perform reception processing at timing when traffic does not arrive. Accordingly, the terminal device 40 can suppress power consumption.

However, in the current NR, a period of the C-DRX is defined by a slot. For that reason, the C-DRX is set at a period of 16 milliseconds or 17 milliseconds. On the other hand, as explained above, traffic arrives at a period of approximately 16.67 milliseconds.

For example, as illustrated in FIG. 9, it is assumed that the period of DRX is 16 milliseconds and the terminal device 40 is turned on for 1 millisecond in the period of 16 milliseconds, that is, performs reception processing in 1 millisecond. In this case, an error of approximately 0.67 milliseconds occurs between the period of the C-DRX and the traffic period. Therefore, in some case, this error is accumulated while the terminal device 40 receives traffic a plurality of times and the terminal device 40 has already been turned off at arrival timing of the traffic. As explained above, the terminal device 40 is likely to miss an ON period and fail in receiving the traffic.

For example, it is assumed that the period of the C-DRX is 17 milliseconds and the terminal device 40 is turned on for 1 millisecond in the period of 17 milliseconds, that is, performs the reception processing in 1 millisecond. In this case, an error of approximately 0.33 milliseconds occurs between the period of the C-DRX and the traffic period. For that reason, in some case, this error is accumulated while the terminal device 40 receives the traffic a plurality of times and the terminal device 40 has not been turned on at the arrival timing of the traffic. In this case, a delay occurs until the traffic is received in a period in which the terminal device 40 is turned on next.

When the errors after the decimal point between the period of the C-DRX and the traffic period are accumulated as explained above, a problem occurs in that the traffic deviates from a setting section for reception.

### <1.3.2. Second problem>

A second problem is high-delay communication support.

In the NR, communication in which a round trip time (RTT) is a high delay with respect to a slot period, such as NTN and millimeter waves, is supported. When the round trip time is the high delay and the number of HARQ processes is not sufficient, HARQ process exhaustion occurs.

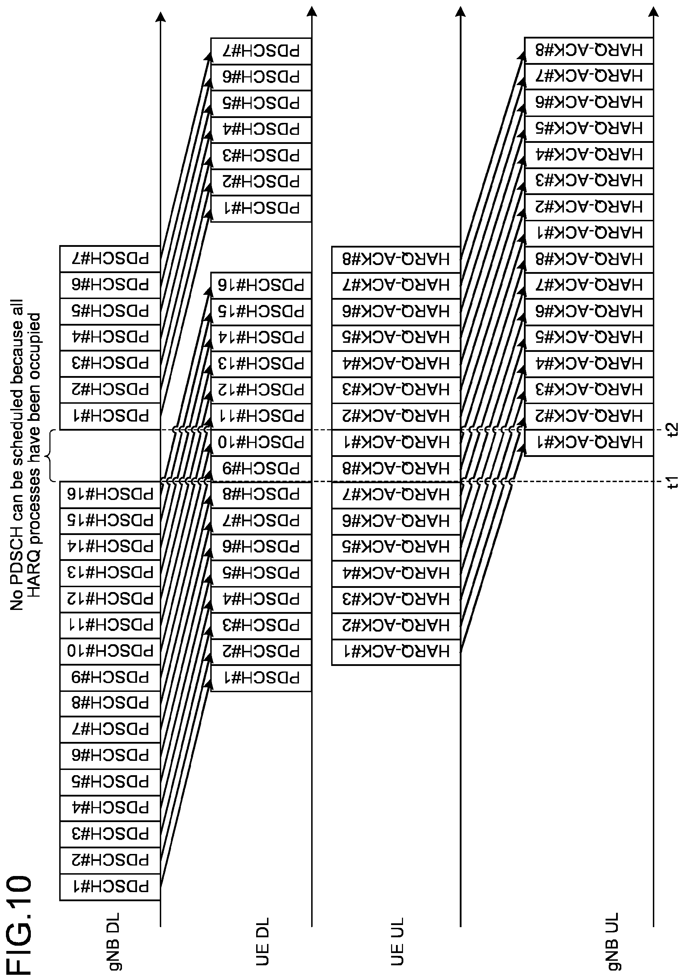

FIG. 10 is a diagram illustrating an example of HARQ process exhaustion due to a high round-trip delay. FIG. 10 illustrates an example in which the terminal device 40 (described as UE in FIG. 10) can transmit HARQ-ACK after 9 milliseconds in response to a PDSCH transmitted by the base station device 60 (described as gNB in FIG. 10).

In this case, since a HARQ process is exhausted, the base station device 60 cannot schedule the PDSCH until reception of HARQ-ACK #1 is completed at time t2 after transmitting a PDSCH #16 at time t1. Since data cannot be scheduled in a slot in a state where all HARQ processes are exhausted as explained above, this causes a decrease in a peak data rate.

### <1.3.3. Third problem>

A third problem is a restriction of scheduling (transport block allocation) due to a slot boundary.

In the NR, data can be scheduled halfway in a slot for traffic with a high delay requirement such as URLLC. However, in the current NR, it is sometimes difficult to schedule data across slot boundaries.

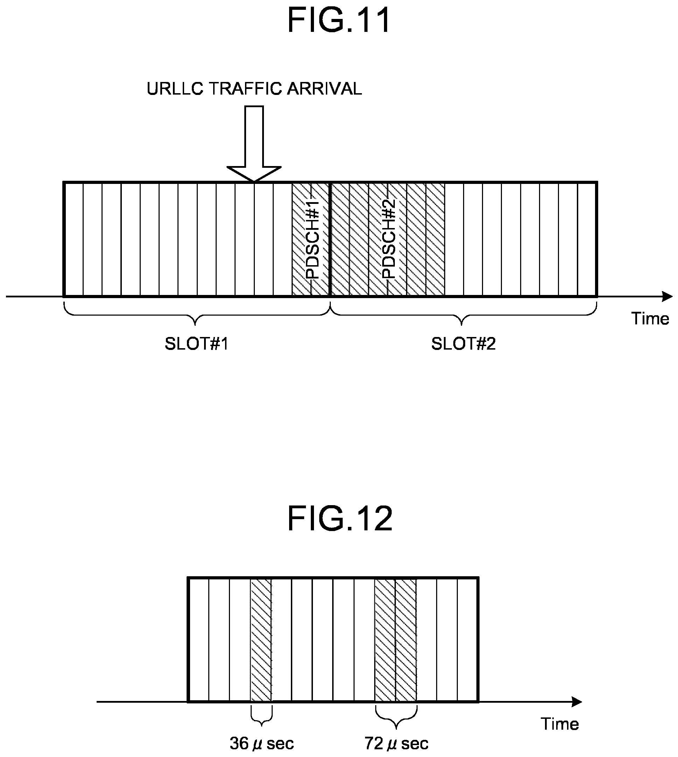

FIG. 11 is a diagram illustrating an example of a schedule restriction by slot boundaries. FIG. 11 illustrates a case in which URLLC traffic arrives halfway in a slot #1. In this case, for example, the URLLC traffic can be transmitted using a PDSCH #1 of a slot #1 and a PDSCH #2 of a slot #2.

When physical channels are allocated across the slot boundaries (in the example illustrated in FIG. 11, across the slots #1 and #2) as explained above, a transport block is divided at the slots and are carried as different physical channels. This technique is called slot segmentation.

In the slot segmentation, the transport block is divided and different physical channels are transmitted. For this reason, there is a problem in that a control signal and a reference signal also have to be respectively individually provided to physical channels arranged in the slots an overhead increases.

### <1.3.4. Fourth problem>

A fourth problem is ultra-low delay support in a low frequency band.

In a low frequency band such as FR1, assuming a high multipath environment and band utilization efficiency, it is preferable to set a narrow subcarrier spacing such as 15 kHz or 30 kHz. On the other hand, in the case of the narrow subcarrier spacing, a symbol length is large. Specifically, the symbol length is approximately 72 microseconds in the case of 15 kHz and 36 microseconds in the case of 30 kHz per one OFDM symbol.

FIG. 12 is a diagram illustrating an example of a symbol length at a subcarrier spacing of 30 kHz. In the case of the subcarrier spacing of 30 kHz, the symbol length is 36 microseconds for one symbol and 72 microseconds for two symbols.

However, as explained above, 0.1 millisecond (100 microseconds) can be required as the requirement for the low delay of the 6G. If two symbols or more in the case of 15 kHz and three symbols or more in the case of 30 kHz are configured as a physical channel, the length of the physical channel exceeds 100 microseconds. For that reason, in this case, it is difficult to realize a transmission delay of 100 microseconds or less.

### <1.4. Overview of the proposed technology>

Therefore, in the proposed technology of the present disclosure, a plurality of different slot configurations and/or symbol configurations are provided to a communication device (for example, the base station device 60 and the terminal device 40).

The communication device selects a configuration of a slot and/or a symbol used for communication with other communication devices from the plurality of slot configurations and/or symbol configurations. The communication device communicates with the other communication devices using the selected slot configuration and/or symbol configuration.

Accordingly, the communication device can cope with various traffics and communication topologies and can implement communication with a lower delay.

### <<2. System configuration example>>

### <2.1. Communication system configuration example>

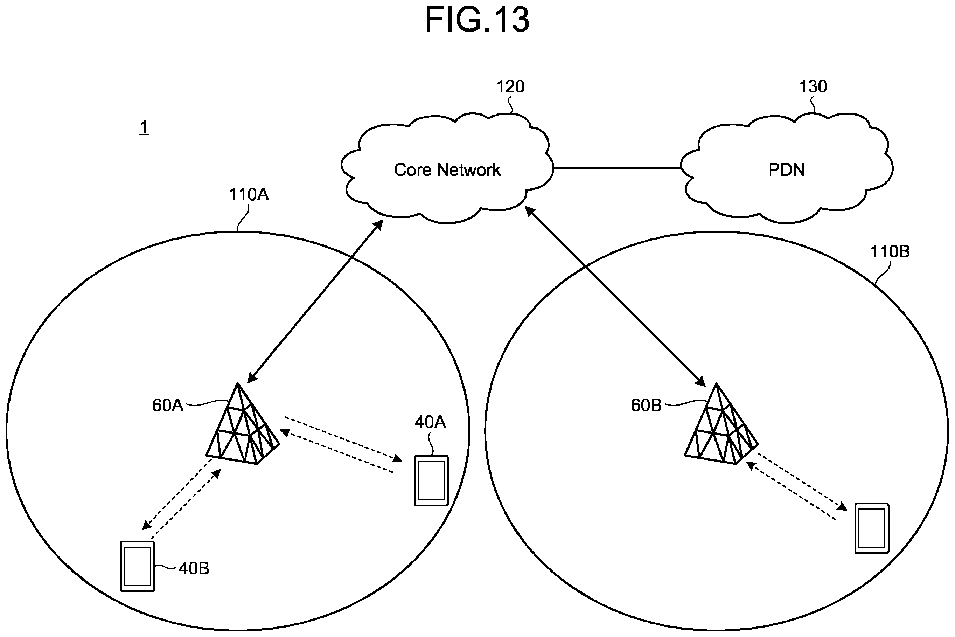

FIG. 13 is a diagram illustrating an example of an overall configuration of a communication system 1 according to the embodiment of the present disclosure. As illustrated in FIG. 13, the communication system 1 includes a plurality of base station devices 60 (60A and 60B), a plurality of terminal devices 40 (40A and 40B), a core network 120, and a PDN (Packet Data Network) 130. Note that the numbers of the devices are not limited the above. For example, the number of each of the base station device 60 and the terminal device 40 may be one.

Note that, in the following explanation, in order to simplify the explanation, it is assumed that a plurality of different slot configurations and/or a plurality of different symbol configurations are provided in communication between the base station device 60 and the terminal device 40. That is, it is assumed that the communication system 1 includes the base station device 60 and the terminal device 40.

However, a plurality of different slot configurations and/or a plurality of different symbol configurations may be provided in communication other than the communication between the base station device 60 and the terminal device 40 (for example, sidelink communication or the like). For example, the communication system 1 may include the devices illustrated in FIG. 7.

### [Base station device 60]

The base station device 60 is a communication device that operates a cell 110 and provides a wireless communication service to one or more terminal devices 40 located on the inside of the coverage of the cell 110. The cell 110 is operated according to any wireless communication system such as LTE, NR, or 6G. The base station device 60 is connected to the core network 120. The core network 120 is connected to the packet data network (PDN) 130 via a gateway device (not illustrated).

Note that the base station device 60 may be configured by a set of a plurality of physical or logical devices. For example, in the embodiment of the present disclosure, the base station device 60 may be distinguished into a plurality of devices of a BBU (Baseband Unit) and an RU(Radio Unit) and may be interpreted as an aggregate of these plurality of devices. Further or instead of this, in the embodiment of the present disclosure, the base station device 60 may be either or both of the BBU and the RU. The BBU and the RU may be connected by a predetermined interface (for example, an eCPRI). Further or instead of this, the RU may be called Remote Radio Unit (RRU) or Radio DoT (RD). Further or instead of this, the RU may correspond to a gNB-DU explained below. Further or instead of this, the BBU may correspond to a gNB-CU explained below. Instead of this, the RU may be connected to a gNB-DU explained below. Further, the BBU may correspond to a combination of the gNB-CU and the gNB-DU explained below. Further or instead of this, the RU may be a device formed integrally with an antenna. An antenna (for example, the antenna integrally formed with the RU) included in the base station device 60 may adopt an Advanced Antenna System and support MIMO(for example, FD-MIMO) or beamforming. In the Advanced Antenna System, the antenna (for example, the antenna integrally formed with the RU) included in the base station device 60 may include, for example, sixty-four transmission antenna ports and sixty-four reception antenna ports.

A plurality of base station devices 60 may be connected to one another. One or a plurality of base station devices 60 may be included in a radio access network (RAN). That is, the base station device 60 may be simply called RAN, RAN node, AN (Access Network), or AN node. The RAN in the LTE is called EUTRAN (Enhanced Universal Terrestrial RAN). The RAN in the NR is called NGRAN. The RAN in W-CDMA (UMTS) is called UTRAN. The base station device 60 in the LTE is called eNodeB(Evolved Node B) or eNB. That is, the EUTRAN includes one or a plurality of eNodeBs (eNBs). The base station device 60 of the NR is called gNodeB or a gNB. That is, the NGRAN includes one or a plurality of gNBs. Further, the EUTRAN may include a gNB (an en-gNB) connected to a core network (EPC) in a communication system (EPS) of the LTE. Similarly, the NGRAN may include an ng-eNB connected to a core network 5GC in a 5G communication system (5GS). Further or instead of this, when the base station device 60 is an eNB, a gNB, or the like, the base station device 60 may be called 3GPP Access. Further or instead of this, when the base station device 60 is a wireless access point (for example, a WiFi Access Point), the base station device 60 may be called non-3GPP Access. Further or instead of this, the base station device 60 may be an optical extension device called RRH (Remote Radio Head). Furthermore, or alternatively, when the base station device 60 is a gNB, the base station device 60 may be called combination of the gNB CU (Central Unit) and gNB DU (Distributed Unit) explained above or one of the gNB CU and the gNB DU. The gNB CU (Central Unit) hosts, for communication with the UE, a plurality of upper layers (for example, RRC, SDAP, and PDCP) in an Access Stratum. On the other hand, the gNB-DU hosts a plurality of lower layers (for example, RLC, MAC, and PHY) in the Access Stratum. That is, among messages and information explained below, RRC signaling (for example, various SIBs including MIB and SIB1, an RRCSetup message, and an RRCReconfiguration message) may be generated by the gNB CU and, on the other hand, a DCI and various physical channels (for example, a PDCCH and a PBCH) explained below may be generated by the gNB-DU. Alternatively, in the RRC signaling, for example, a part of configurations (configuration information) such as IE: cellGroupConfig may be generated by the gNB-DU and the remaining configurations may be generated by the gNB-CU. These configurations (configuration information) may be transmitted and received through an F1 interface explained below. The base station device 60 may be configured to be capable of communicating with the other base station devices 60. For example, when the plurality of base station devices 60 are eNBs or a combination of an eNB and an en-gNB, the base station devices 60 may be connected by an X2 interface. Further or instead of this, in a case in which the plurality of base station devices 60 are gNBs or a combination of a gn-eNB and a gNB, the devices may be connected by an Xn interface. Further or instead of this, when the plurality of base station devices 60 is a combination of a gNB CU (Central Unit) and a gNB DU (Distributed Unit), the devices may be connected by the F1 interface explained above. A message/information (information concerning RRC signaling or DCI and a Physical Channel) explained below may be communicated (for example, via the X2, Xn, or F1 interface) among the plurality of base station devices 60.

Further, as explained above, the base station device 60 may be configured to manage a plurality of cells. A cell provided by the base station device 60 is called a Serving cell. The Serving cell includes a PCell (Primary Cell) and an SCell (Secondary Cell). When Dual Connectivity (for example, EUTRA-EUTRA Dual Connectivity, EUTRA-NR Dual Connectivity (ENDC), EUTRA-NR Dual Connectivity with 5GC, NR-EUTRA Dual Connectivity (NEDC), or NR-NR Dual Connectivity) is provided to the UE (for example, the terminal device 40), the PCell and zero or one or more SCell(s) provided by an MN (Master Node) are called Master Cell Group. Further, the Serving cell may include a PSCell (Primary Secondary Cell or Primary SCG Cell). That is, when the Dual Connectivity is provided to the UE, the PSCell and zero or one or more SCell(s) provided by the SN (Secondary Node) are called Secondary Cell Group (SCG). Unless special setting (for example, a PUCCH on an SCell) is performed, a physical uplink control channel (PUCCH) is transmitted by the PCell and the PSCell but is not transmitted by the SCell. A Radio Link Failure is also detected in the PCell and the PSCell but is not detected in the SCell (may not be detected). Since the PCell and the PSCell have a special role in the Serving Cell (s) as explained above, the PCell and the PSCell are also called Special Cells (SpCells). One Downlink Component Carrier and one Uplink Component Carrier may be correlated with one cell. A system bandwidth corresponding to one cell may be divided into a plurality of bandwidth parts. In this case, one or more Bandwidth Parts (BWPs) may be set for the UE and one Bandwidth Part may be used for the UE as an Active BWP. Wireless resources (for example, a frequency band, a numerology (subcarrier spacing), and a slot format (a slot configuration)) that can be used by the terminal device 40 may be different for each cell, each component carrier, or each BWP.

### [Core network 120]

When the core network 120 is a core network of the NR (5G Core (5GC)), the core network 120 can include an AMF (Access and Mobility Management Function), an SMF (Session Management Function), a UPF (User Plane Function), a PCF (Policy Control Function), and a UDM (Unified Data Management).

When the core network 120 is an LTE core network (Evolved Packet Core (EPC)), the core network 120 can include an MME (Mobility Management Entity), an S-GW (Serving gateway), a P-GW (PDN gateway), a PCRF (Policy and Charging Rule Function), an HSS (Home Subscriber Server). The AMF and the MME are control nodes that handle control plane signals and manage a moving state (Mobility) of the terminal device 40. The UPF and the S-GW/P-GW are nodes that handle user plane signals. The PCF/PCRF is a control node that performs control concerning a policy and charging such as QoS (Quality of Service) for a PDU session or a bearer. The UDM/HSS is a control node that handles subscriber data and performs service control.

### [Terminal device 40]

The terminal device 40 is a communication device that wirelessly communicates with the base station device 60 based on control by the base station device 60.

The terminal device 40 is a wireless communication device that wirelessly communicates with the other devices. The terminal device 40 is, for example, a sensor or a camera device having a communication function, a mobile phone, a smart device (a smartphone or a tablet terminal), a PDA (Personal Digital Assistant), or a personal computer. The terminal device 40 may be a head mounted display, VR goggles, or the like having a function of wirelessly transmitting and receiving data. The terminal device 40 may be a moving body such as an automobile or a drone.

For example, the terminal device 40 wirelessly communicates with the other terminal devices 40 based on control by the base station device 60 or autonomously. In that case, the terminal device 40 transmits a sidelink signal to the other terminal device 40 and receives a sidelink signal from the other terminal device 40 in the PC 5 link. Transmission and reception of the sidelink signals by the terminal device 40 are collectively described as sidelink communication. When performing the sidelink communication, the terminal device 40 may be capable of using an automatic retransmission technique such as HARQ (Hybrid Automatic Repeat reQuest).

The terminal device 40 may be capable of performing NOMA (Non Orthogonal Multiple Access) communication with the base station device 60. Note that the terminal device 40 may also be capable of performing the NOMA communication in communication (sidelink) with the other terminal devices 40. The terminal device 40 may be capable of performing LPWA (Low Power Wide Area) communication with other communication devices (for example, the base station device 60 and the other terminal devices 40). Besides, the wireless communication used by the terminal device 40 may be wireless communication using a millimeter wave or a terahertz wave. Note that the wireless communication (including the sidelink communication) used by the terminal device 40 may be wireless communication using radio waves or wireless communication (optical wireless) using infrared rays or visible light.

### <2.2. Configuration example of the base station device>

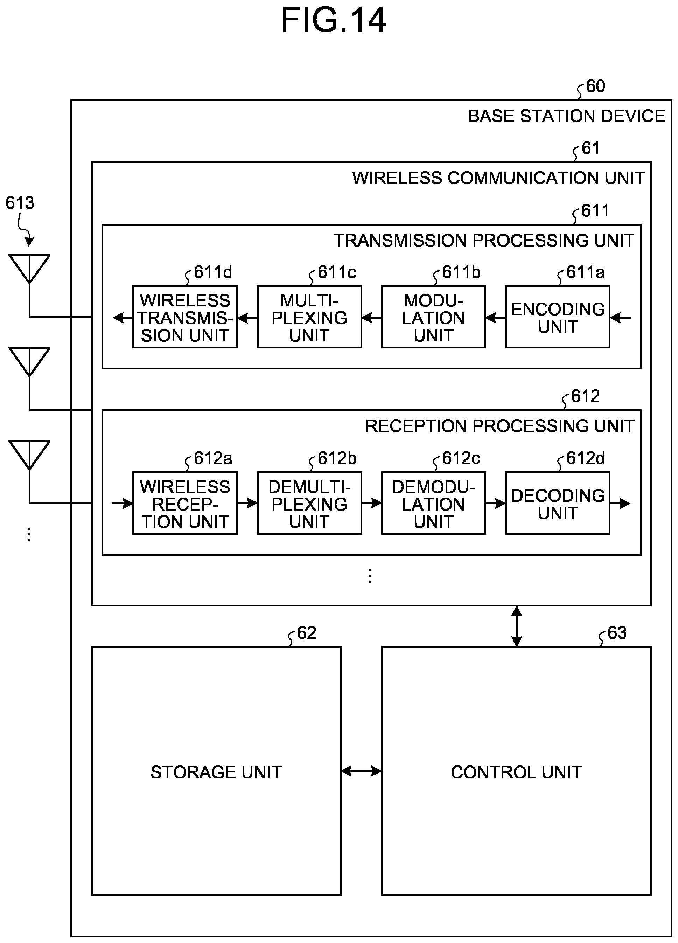

FIG. 14 is a diagram illustrating a configuration example of the base station device 60 according to the embodiment of the present disclosure. The base station device 60 is a communication device (a radio system) that wirelessly communicates with the terminal device 40. The base station device 60 is a type of an information processing device.

The base station device 60 includes a wireless communication unit 61, a storage unit 62, and a control unit 63. Note that the components illustrated in the drawing are functional components and hardware components may be different from the functional components. The functions of the base station device 60 may be distributed and implemented in a plurality of physically separated devices.

The wireless communication unit 61 is a wireless communication interface that wirelessly communicates with other communication devices (for example, the terminal device 40 and the other base station devices 60). The wireless communication unit 61 operates under the control of the control unit 63. The wireless communication unit 61 may be adapted to a plurality of wireless access schemes. For example, the wireless communication unit 61 may be adapted to the 6G, the NR, and the LTE. The wireless communication unit 61 may be adapted to other cellular communication schemes such as W-CDMA and cdma2000. The wireless communication unit 61 may be adapted to a wireless LAN communication scheme in addition to the cellular communication scheme. Naturally, the wireless communication unit 61 may be only adapted to one wireless access scheme.

The wireless communication unit 61 includes a reception processing unit 612, a transmission processing unit 611, and an antenna 613. The wireless communication unit 61 may include a plurality of reception processing units 612, a plurality of transmission processing units 611, and a plurality of antennas 613. When the wireless communication unit 61 is adapted to a plurality of wireless access schemes, the units of the wireless communication unit 61 can be configured individually for each of wireless access schemes. For example, if the base station device 60 is adapted to the 6G, the NR, and the LTE, the reception processing unit 612 and the transmission processing unit 611 may be individually configured according to the 6G, the NR, and the LTE.

The reception processing unit 612 processes an uplink signal received via the antenna 613. The reception processing unit 612 includes a wireless reception unit 612a, a demultiplexing unit 612b, a demodulation unit 612c, and a decoding unit 612d.

The wireless reception unit 612a performs downconversion, removal of an unnecessary frequency component, control of an amplification level, quadrature demodulation, conversion into a digital signal, removal of a guard interval, extraction of a frequency domain signal by fast Fourier transform, and the like on the uplink signal. For example, it is assumed that the wireless access scheme of the base station device 60 is a cellular communication scheme such as the LTE. At this time, the demultiplexing unit 612b separates an uplink channel such as a PUSCH (Physical Uplink Shared Channel) or a PUCCH (Physical Uplink Control Channel) and an uplink reference signal from a signal output from the wireless reception unit 612a. The demodulation unit 612c demodulates a received signal using a modulation scheme such as BPSK (Binary Phase Shift Keying) or QPSK (Quadrature Phase shift Keying) with respect to a modulation symbol of the uplink channel. The modulation scheme used by demodulation unit 612c may be multi-value QAM such as 16QAM (Quadrature Amplitude Modulation), 64QAM, or 256QAM. The decoding unit 612d performs decoding processing on demodulated encoded bits of the uplink channel. The decoded uplink data and uplink control information are output to the control unit 63.

The transmission processing unit 611 performs transmission processing for downlink control information and downlink data. The transmission processing unit 611 includes an encoding unit 611a, a modulation unit 611b, a multiplexing unit 611c, and a wireless transmission unit 611d.

The encoding unit 611a encodes the downlink control information and the downlink data input from the control unit 63 using an encoding scheme such as block encoding, convolutional encoding, or turbo encoding. The modulation unit 611b modulates the encoded bits output from encoding unit 611a with a predetermined modulation scheme such as BPSK, QPSK, 16QAM, 64QAM, or 256QAM. The multiplexing unit 611c multiplexes modulation symbols and downlink reference signals of channels and arranges the multiplexed modulation symbols and downlink reference signals in a predetermined resource element. The wireless transmission unit 611d performs various kinds of signal processing on a signal from the multiplexing unit 611c. For example, the wireless transmission unit 611d performs processing such as conversion into a time domain by fast Fourier transform, addition of a guard interval, generation of a baseband digital signal, conversion into an analog signal, quadrature modulation, up-conversion, removal of an extra frequency component, and power amplification. A signal generated by the transmission processing unit 611 is transmitted from the antenna 613.

The storage unit 62 is a storage device capable of reading and writing data such as a DRAM, an SRAM, a flash memory, or a hard disk. The storage unit 62 functions as storage means of the base station device 60.

The control unit 63 is a controller that controls the units of the base station device 60. The control unit 63 is implemented by a processor such as a CPU (Central Processing Unit) or an MPU (Micro Processing Unit). For example, the control unit 63 is implemented by a processor executing various programs stored in a storage device inside the base station device 60 using a RAM (Random Access Memory) or the like as a work area. Note that the control unit 63 may be implemented by an integrated circuit such as an ASIC (Application Specific Integrated Circuit) or an FPGA (Field Programmable Gate Array). All of the CPU, the MPU, the ASIC, and the FPGA can be regarded as the controller.

### <2.3. Configuration example of the terminal device>

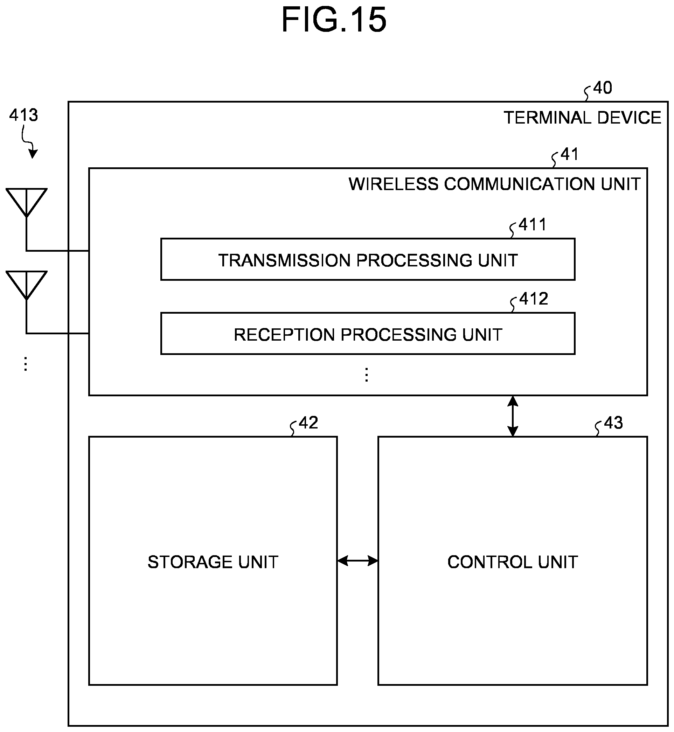

FIG. 15 is a diagram illustrating a configuration example of the terminal device 40 according to the embodiment of the present disclosure. The terminal device 40 is a communication device (a wireless system) that wirelessly communicates with the base station device 60. The terminal device 40 is a type of an information processing device.

The terminal device 40 includes a wireless communication unit 41, a storage unit 42, and a control unit 43. Note that the components illustrated in FIG. 15 are functional components and hardware components may be different from the functional components. The functions of the terminal device 40 may be distributed and implemented in a plurality of physically separated components.

The wireless communication unit 41 is a wireless communication interface that wirelessly communicates with other communication devices (for example, the base station device 60 and the other terminal devices 40). The wireless communication unit 41 operates according to control of the control unit 43. The wireless communication unit 41 is adapted to one or a plurality of wireless access schemes. For example, the wireless communication unit 41 is adapted to both of the NR and the LTE. The wireless communication unit 41 may be adapted to other wireless access schemes such as W-CDMA (registered trademark) and cdma2000 (registered trademark).

The wireless communication unit 41 includes a reception processing unit 412, a transmission processing unit 411, and an antenna 413. The wireless communication unit 41 may include a plurality of reception processing units 412, a plurality of transmission processing units 411, and a plurality of antennas 413. Note that, when the wireless communication unit 41 supports a plurality of wireless access schemes, the units of the wireless communication unit 41 can be configured individually for each of the wireless access schemes. For example, the reception processing unit 412 and the transmission processing unit 411 may be individually configured according to the LTE, the NR, and the 6G. The configurations of the reception processing unit 412 and the transmission processing unit 411 are the same as the configurations of the reception processing unit 612 and the transmission processing unit 611 of the base station device 60.

The storage unit 42 is a data readable/writable storage device such as a DRAM, an SRAM, a flash memory, or a hard disk. The storage unit 42 functions as storage means of the terminal device 40.

The control unit 43 is a controller that controls the units of the terminal device 40. The control unit 43 is implemented by a processor such as a CPU or an MPU. For example, the control unit 43 is implemented by the processor executing various programs stored in a storage device inside the terminal device 40 using a RAM or the like as a work area. Note that the control unit 43 may be implemented by an integrated circuit such as an ASIC or an FPGA. All of the CPU, the MPU, the ASIC, and the FPGA can be regarded as the controller.

### <<3. Technical features>>

### <3.1. Slot configuration and/or symbol configuration>

As explained above, in the embodiment of the present disclosure, a plurality of different slot configurations and/or a plurality of different symbol configurations are provided to one communication device (for example, the base station device 60 or the terminal device 40). The different slot configurations or the different symbol configurations have at least one feature of the following configuration examples. Note that, when the base station device 60 and the terminal device 40 are not particularly distinguished, the base station device 60 and the terminal device 40 are also simply referred to as communication devices.

### [Configuration Example 1: Number of OFDM symbols per slot]

As an example of different slot configurations or different symbol configurations, there is a configuration in which the number of symbols per slot is different.

In the LTE of the related art, the number of symbols is defined as a fixed number of 7 symbols per one slot, and in the NR of the related art, the number of symbols is defined as a fixed number of 14 symbols per one slot. On the other hand, in this configuration example, the number of symbols per one slot is variable according to a situation. Examples of the number of symbols per slot include two, four, seven, fourteen, twenty-eight, fifty-six, and one hundred and twelve. By flexibly changing the number of symbols per slot, the communication system 1 can change a slot length without changing a subcarrier spacing.

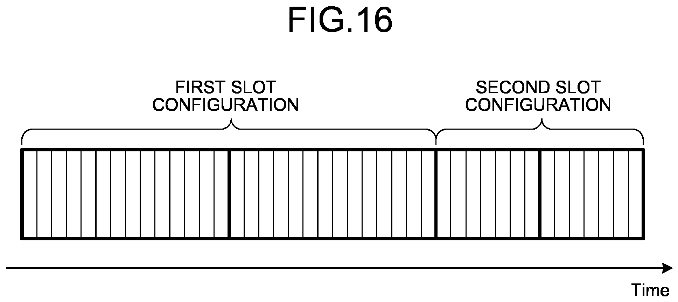

FIG. 16 is a diagram illustrating an example of different slot configurations according to the embodiment of the present disclosure. First and second slot configurations illustrated in FIG. 16 are different from each other in the number of OFDM symbols per slot.

In the first slot configuration, one slot consists of fourteen symbols. In the second slot configuration, one slot consists of seven symbols. By setting and flexibly switching a plurality of slot configurations as explained above, the communication device is capable of storing various traffics and topologies in one carrier (cell).

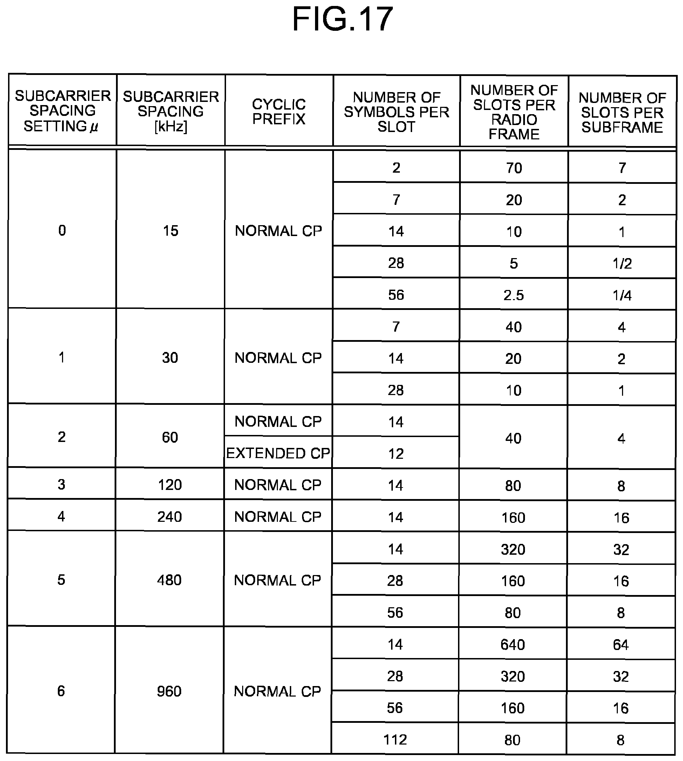

FIG. 17 is a table illustrating an example of subcarrier spacing setting according to the embodiment of the present disclosure. The setting table of FIG. 17 supports a slot configuration in the case in which the number of OFDM symbols per slot is different.

When a subcarrier spacing is 15 kHz and 30 kHz, it can be assumed that the number of symbols per slot is set to fourteen or less (two or seven) because of a demand for a lower delay. Further, in order to support low-frequency band and high-delay communication such as NTN, when the subcarrier spacing is 15 kHz and 30 kHz, it can be assumed that the number of symbols per slot is set to fourteen or more (twenty-eight or fifty-six).

In the example illustrated in FIG. 17, when the subcarrier spacing is 15 kHz, the number of symbols per slot can be set to two, seven, fourteen, twenty-eight, and fifty-six. When the subcarrier spacing is 30 kHz, the number of symbols per slot can be set to seven, fourteen, and twenty-eight.

When the subcarrier spacing is 480 kHz and 960 kHz, since a process time has a high delay with respect to the slot length, it can be assumed that the number of symbols per slot is set to fourteen or more (twenty-eight, fifty-six, and one hundred and twelve).

In the example illustrated in FIG. 17, when the subcarrier spacing is 480 kHz, the number of symbols per slot can be set to fourteen, twenty-eight, and fifty-six. When the subcarrier spacing is 960 kHz, the number of symbols per slot can be set to fourteen, twenty-eight, fifty-six, and one hundred and twelve.

As explained above, in the embodiment of the present disclosure, different slot configurations or different symbol configurations are defined even in the same numerology. Specifically, different slot configurations or different symbol configurations are defined even if the subcarrier spacing and/or the cyclic prefix are the same.

For example, here, since different numbers of symbols are defined even in the same numerology, the communication device can support ultra-low-delay or high-delay communication.

Note that the number of symbols per slot does not need to be limited by a multiple of 14 and may be defined by a value such as three, four, or twenty. The number of symbols per slot may be defined by a value (for example, 60 fps or 1/60) corresponding to a period of traffic.

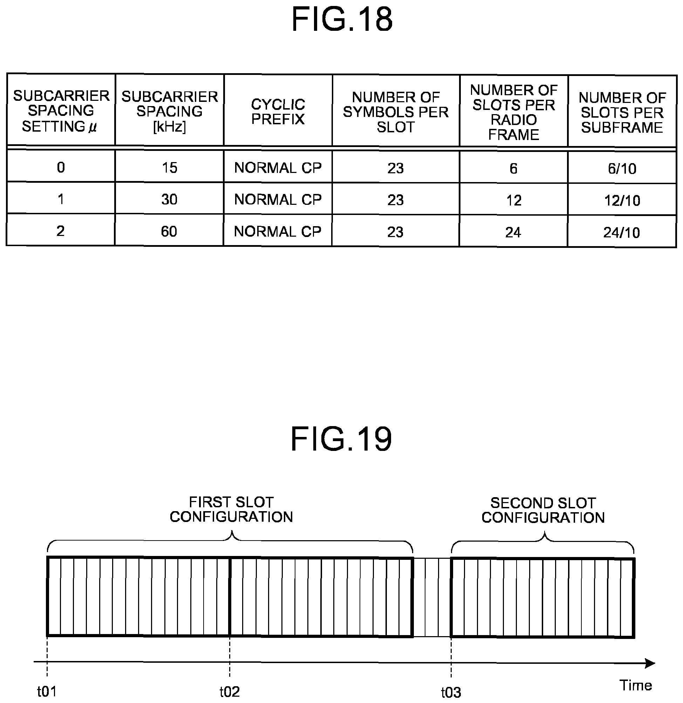

FIG. 18 is a table illustrating another example of the subcarrier spacing setting according to the embodiment of the present disclosure. The setting table of FIG. 18 is a setting table of a slot configuration corresponding to a traffic period (60 fps) of XR. As an example, when 1/60 seconds is assumed to be a ten-slot configuration, the number of symbols per slot is twenty-three symbols.

### [Configuration example 2: Start position of a slot]

Examples of different slot configurations or different symbol configurations include configurations in which start positions of slots are different.

In the LTE or the NR of the related art, a start position of a slot based on a synchronization signal is determined. In this configuration example, a start position can be determined to be different for each slot configuration and/or symbol configuration. For example, in this configuration example, the start position is different for each slot configuration and/or symbol configuration based on a synchronization signal.

FIG. 19 is a diagram illustrating another example of the different slot configurations according to the embodiment of the present disclosure. FIG. 19 illustrates an example of slot configurations in the case in which start positions of slots are different.

In the example illustrated in FIG. 19, a second slot configuration is defined as a configuration in which a start position is different from a start position of a first slot configuration by three symbols.

For example, it is assumed that slot lengths of the first slot configuration and the second slot configuration are the same L₁. It is assumed that a symbol length is L₂.

In this case, a start position of a first slot having the first slot configuration is a position obtained by adding an integral multiple of L₁ to a start position t01 of the first slot in the first place. In the example illustrated in FIG. 19, a start position t02 of a first slot in the second place is t02=t01+L₁*1.

On the other hand, a start position t03 of a second slot having the second slot configuration is a position obtained by adding an integral multiple of L₁ to the start position t01 of the first slot in the first place and further adding a deviation (L₂*3) for three symbols. In the example illustrated in FIG. 19, the start position t03 of the second slot is t03=t01+L₁*2+L₂*3.

Here, it is assumed that the start positions are different by three symbols in the first slot configuration and the second slot configuration, that is, the start positions deviate by three symbols. However, deviation of the start positions is not limited to three symbols. For example, the deviation of the start positions of the first slot configuration and the second slot configuration may be two symbols or less or may be four symbols or more.

Here, two slot configurations (the first and second slot configurations) in which the start positions are different are explained. However, there may be three or more slot configurations in which start positions are different. For example, a third slot configuration in which a start position is different from the start position of the first slot configuration by five symbols may be defined.

By flexibly differentiating the start positions of the slots as explained above, the communication system 1 can eliminate scheduling restrictions at a frame boundary and deviation in traffic periods of a slot and an XR.

### [Configuration example 3: OFDM symbol length]

Examples of different slot configurations or different symbol configurations include configurations in which symbol lengths are different.

In the LTE or the NR of the related art, the symbol length is calculated by multiplying a CP length of the number of points of 2048, 160, and/or 144 by a sampling interval determined depending on a subcarrier spacing.

In this configuration example, for example, a symbol length consisting of the number of points of 1024 or 4096 can be determined. Accordingly, the communication system 1 can configure OFDM symbols having half or twice the length at the same subcarrier spacing.

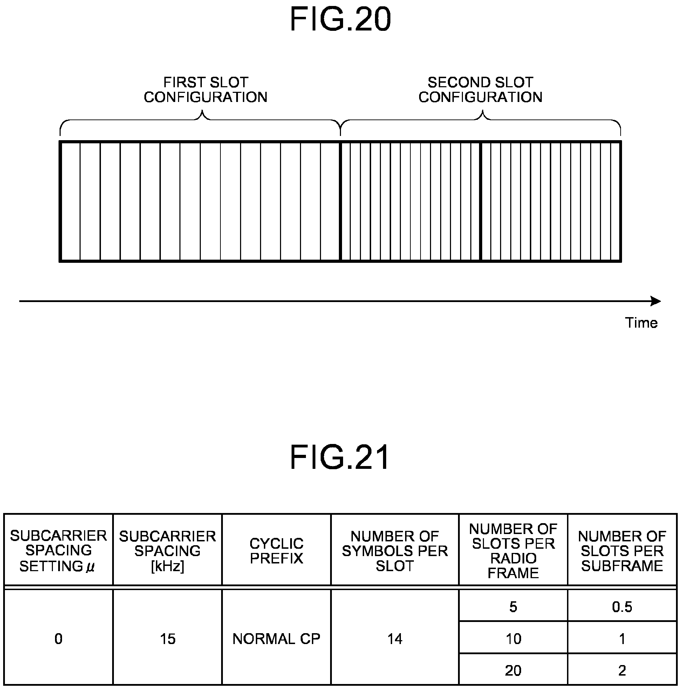

FIG. 20 is a diagram illustrating another example of the different slot configurations according to the embodiment of the present disclosure. FIG. 20 illustrates an example of slot configurations in the case in which OFDM symbol lengths are different.

In a first slot configuration and a second slot configuration illustrated in FIG. 20, the numbers of symbols and subcarrier spacings in slots are the same. However, symbol lengths are different in the first slot configuration and the second slot configuration. In the example illustrated in FIG. 20, the symbol length of the first slot configuration is twice the symbol length of the second slot configuration.

FIG. 21 is a table illustrating an example of slot setting according to the embodiment of the present disclosure. The setting table of FIG. 21 supports slot configurations in the case in which symbol lengths are different.

In the example illustrated in FIG. 21, the number of symbols per slot is 14 and a subcarrier spacing is 15 kHz. On the other hand, the number of slots per radio frame can take a plurality of values of five, ten, and twenty. In addition, the number of slots per subframe can take a plurality of values of 0.5, one, and two.

This implicitly indicates that the symbol lengths are different. Specifically, symbol lengths each consisting of 1024, 2048, and 4096 points are determined by the setting table in FIG. 21.

Note that, in this configuration example, the number of points of an OFDM symbol is not limited to a power of two. For example, the number of points can consist of any value. A CP length may be flexibly changed to adjust the symbol lengths.

Note that the default slot configuration may be an NR slot configuration or a slot configuration notification of which is provided by system information (MIB or SIB).

### <3.2. Notification Method of Setting of Plurality of Slot Configurations and/or Symbol Configurations>

As explained above, the communication device according to the embodiment of the present disclosure selects one configuration from a plurality of different slot configurations and/or symbol configurations to perform communication. As explained above, in the present embodiment, a plurality of slot configurations and/or symbol configurations is set in one communication device, and the communication device flexibly changes application of the slot configurations and/or the symbol configurations according to traffic and topology. Accordingly, the communication device can support various use cases of the 6G.

When one slot configuration is determined (set) by the base station device 60 out of a plurality of different slot configurations and/or symbol configurations, the base station device 60 notifies the terminal device 40 of configuration information (an example of selection information) concerning the determined (set) configuration. In the following explanation, an example of a notification method (hereinafter also described as setting notification method) in which the base station device 60 notifies the terminal device 40 of the determined (set) configuration is explained.

### [Setting notification method 1: RRC Setup]

A first example of the setting notification method is RRC Setup.

### (1-1: System information (MIB or SIB))

When the RRC Setup is used as the setting notification method, the base station device 60 can include, in system information, for example, selection information concerning a set configuration and notify the terminal device 40 of the selection information.

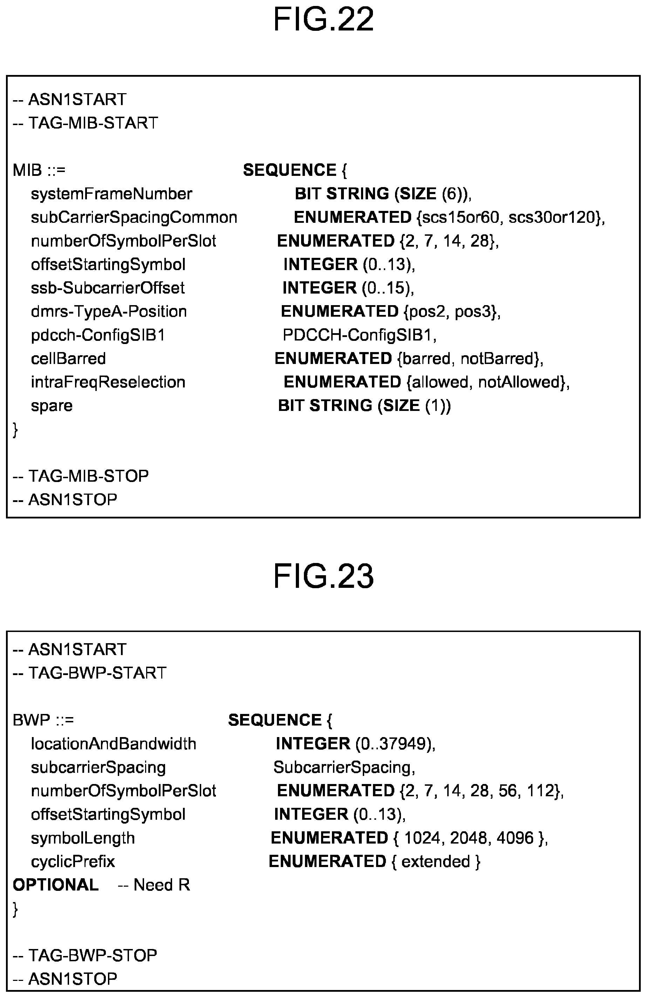

FIG. 22 is a diagram illustrating an example of system information notification of which is provided by the base station device 60 according to the embodiment of the present disclosure.

In the example illustrated in FIG. 22, the base station device 60 includes, in, for example, an IE (Information Element) of an MIB, selection information concerning setting of a slot configuration and/or a symbol configuration and notifies the terminal device 40 of the selection information.

The terminal device 40 recognizes the number of symbols per slot from a field numberOfSymbolPerSlot in the IE of the MIB. The field numberOfSymbolPerSlot indicates the number of symbols. The terminal device 40 recognizes a slot boundary from offsetStartingSymbol in the IE of the MIB. offsetStartingSymbol indicates a symbol offset from a detection position of an SSB to a start position of the slot.

As another example of the system information notification of which is provided by the base station device 60, for example, there is an SIB1 (System Information Block Type 1). In this case, the base station device 60 includes, in the SIB1, configuration information (for example, an IE (Information Element)) concerning setting of a slot configuration and/or a symbol configuration and notifies the terminal device 40 of the setting information.

The terminal device 40 recognizes the number of symbols per slot from the field numberOfSymbolPerSlot in the IE of the SIB1. The field numberOfSymbolPerSlot indicates the number of symbols. The terminal device 40 recognizes a slot boundary from offsetStartingSymbol in the IE of the SIB1. offsetStartingSymbol indicates a symbol offset from a detection position of an SSB to a start position of the slot.

Note that, since the system information is broadcast to the entire cell, when information concerning the slot configuration and/or the symbol configuration set by the base station device 60 is included in the system information and provided in notification, the configuration is set to be common (cell-specific) to the terminal devices 40 in the cell. The slot configuration and/or the symbol configuration notification of which is provided by the system information (MIB and SIB) is preferably a default slot configuration and/or symbol configuration.

### (1-2: Dedicated RRC)

When the dedicated RRC is used as the setting notification method, the base station device 60 can include, in the dedicated RRC, for example, a set configuration and notify the terminal device 40 of the set configuration.

FIG. 23 is a diagram illustrating an example of dedicated RRC signaling notification of which is provided by the base station device 60 according to the embodiment of the present disclosure.

In the example illustrated in FIG. 23, the base station device 60 includes, in an IE of setting concerning a bandwidth part (BWP) in the dedicated RRC signaling, configuration information concerning setting of slot configuration and/or symbol configuration and notifies the terminal device 40 of the configuration information.

The terminal device 40 recognizes the number of symbols per slot from a field numberOfSymbolPerSlot in the IE (a BWP) of a BWP. The field numberOfSymbolPerSlot is a field indicating the number of symbols. The terminal device 40 recognizes a slot boundary from offsetStartingSymbol in IE (the BWP) of the BWP. offsetStartingSymbol indicates a symbol offset from a detection position of an SSB to a start position of the slot. The terminal device 40 recognizes a symbol length from a field symbolLength in the IE (the BWP) of the BWP. The field symbolLength is a field indicating a symbol length per one OFDM symbol.

When the base station device 60 includes, in the setting of the BWP, the configuration information concerning the slot configuration and/or the symbol configuration and notifies the terminal device 40 of the configuration information as explained above, the base station device 60 can set different slot configurations and/or symbol configurations for each BWP. The base station device 60 can switch the slot configuration and/or the symbol configuration at the same time by switching the BWP.

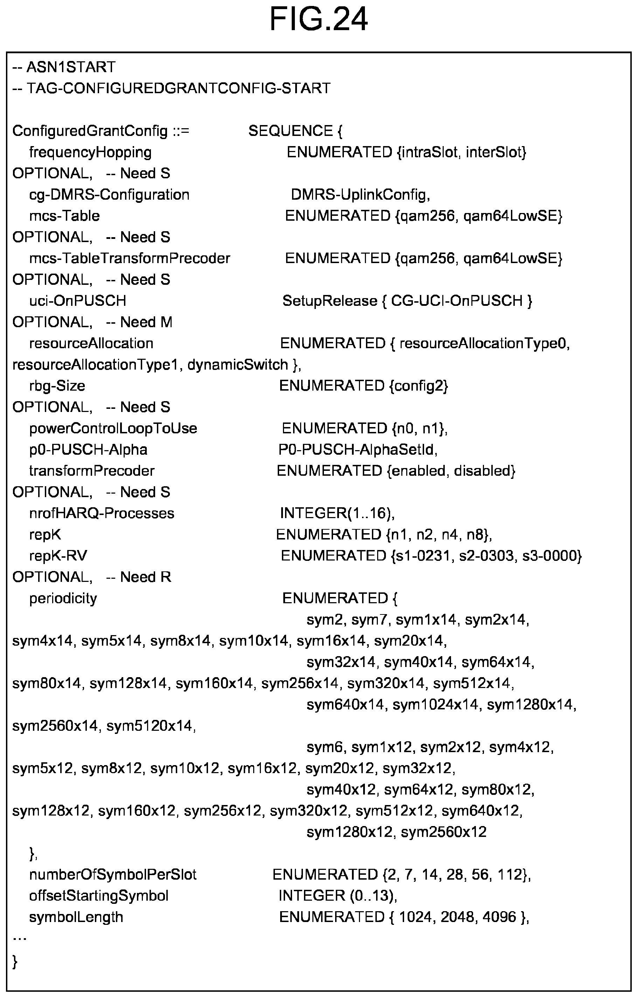

FIG. 24 is a diagram illustrating another example of the dedicated RRC signaling notification of which is provided by the base station device 60 according to the embodiment of the present disclosure.

In the example illustrated in FIG. 24, the base station device 60 includes, in an IE of setting concerning configured grant in the dedicated RRC signaling, configuration information concerning setting of a slot configuration and/or a symbol configuration and notifies the terminal device 40 of the configuration information.

The terminal device 40 recognizes the number of symbols per slot from a field numberOfSymbolPerSlot in the IE (ConfiguredGrantConfig) of the configured grant. The field numberOfSymbolPerSlot is a field indicating the number of symbols. The terminal device 40 recognizes a slot boundary from offsetStartingSymbol. offsetStartingSymbol indicates a symbol offset from a detection position of an SSB to a start position of the slot. The terminal device 40 recognizes a symbol length from a field symbolLength. The field symbolLength is a field indicating a symbol length per one OFDM symbol.

Then, an actual value of a period of a configured grant resource defined in units of slots is determined based on the configuration information concerning the slot configuration and/or the symbol configuration.

When the base station device 60 includes, in the setting of the configured grant, the configuration information concerning the slot configuration and/or the symbol configuration and notifies the terminal device 40 of the configuration information as explained above, the base station device 60 can set different configurations for each setting of the configured grant.

That is, different slot configurations and/or symbol configurations can be applied to different configured grant settings. A slot configuration and/or a symbol configuration different from other configurations (for example, SPS and C-DRX) can be applied to the configured grant.

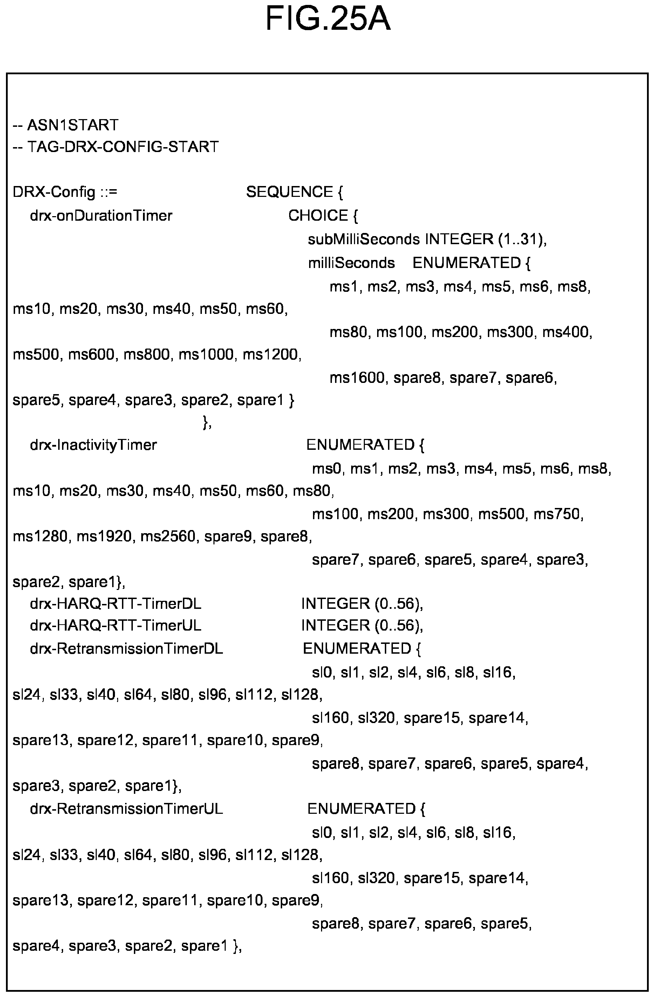

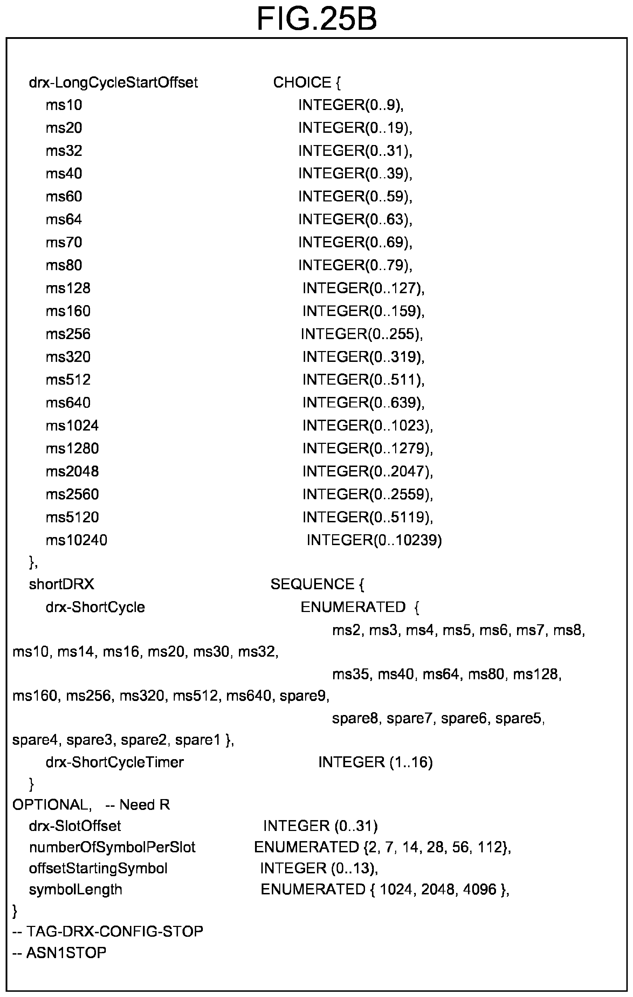

FIG. 25A and FIG. 25B are diagrams illustrating another example of the dedicated RRC signaling notification of which is provided by the base station device 60 according to the embodiment of the present disclosure.

In the example illustrated in FIG. 25A and 25B, the base station device 60 includes, in an IE of setting concerning a C-DRX in the dedicated RRC signaling, configuration information concerning setting of a slot configuration and/or a symbol configuration and notifies the terminal device 40 of the configuration information.

The terminal device 40 recognizes the number of symbols per slot from a field numberOfSymbolPerSlot in an IE (DRX-Config) of a C-DRX. The field numberOfSymbolPerSlot is a field indicating the number of symbols. The terminal device 40 recognizes a slot boundary from offsetStartingSymbol. offsetStartingSymbol indicates a symbol offset from a detection position of an SSB to a start position of the slot. The terminal device 40 recognizes a symbol length from a field symbolLength. The field symbolLength is a field indicating a symbol length per one OFDM symbol.

Then, a period of the C-DRX defined in units of slots and actual values of an offset and a timer are determined based on information concerning the slot configuration and/or the symbol configuration.

When the setting of the C-DRX includes setting concerning the slot configuration and/or the symbol configuration, the C-DRX setting can be set to a slot configuration and/or a symbol configuration different from other settings (for example, CG and SPS).

As explained above, the base station device 60 notifies the terminal device 40 of the setting concerning the slot configuration and/or the symbol configuration using the dedicated RRC signaling. Accordingly, the base station device 60 can change the slot configuration and/or the symbol configuration for each terminal device 40 (UE-specific), for each traffic, and for each setting. The base station device 60 can set more information compared with the case in which the system information is used.

### [Setting notification method 2: SSB (SS/PBCH Block)]

As a second example of the setting notification method, there is an SSB(Synchronization Signal block or Synchronization Signal/Physical Broadcast Channel block). The terminal device 40 detects an SSB corresponding to a slot configuration and/or a symbol configuration to recognize a configuration set by the base station device 60.

### (2-1: Period of the SSB)

The base station device 60 can provide notification of the setting of the slot configuration and/or the symbol configuration, for example, according to a difference in a period of the SSB detected by the terminal device 40.

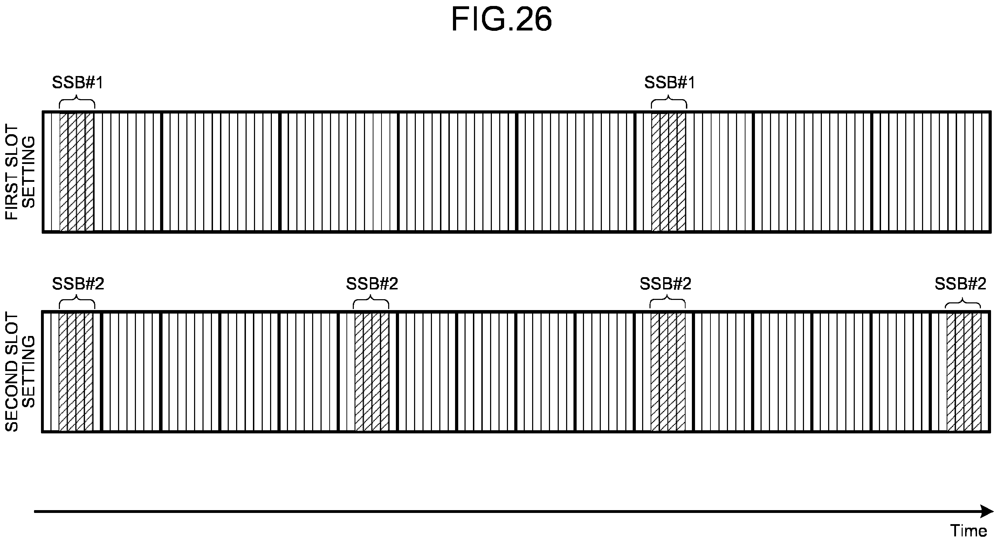

FIG. 26 is a diagram for explaining an example of a setting notification method using the period of the SSB by the base station device 60 according to the embodiment of the present disclosure. FIG. 26 illustrates an example in which the base station device 60 provides notification of a first slot configuration and a second slot configuration using SSBs having different periods.

In the first slot configuration, for example, the number of symbols per one slot is fourteen. In the second slot configuration, for example, the number of symbols per one slot is 1/2 (seven symbols) of the number of symbols in the first slot configuration.

For example, the base station device 60 sets a period of SSB#1 in the case of setting the first slot configuration (hereinafter also referred to as first period) to be longer than a period of SSB#2 in the case of setting the second slot configuration (hereinafter also referred to as second period). In the example illustrated in FIG. 26, the first period corresponding to the first slot configuration is twice the second period corresponding to the second slot configuration.

The terminal device 40 can recognize a slot configuration according to a detection frequency of the SSB.

### (2-2: Detection timing of the SSB)

The base station device 60 can provide notification of setting of a slot configuration and/or a symbol configuration, for example, according to a difference in timing when the SSB is detected.

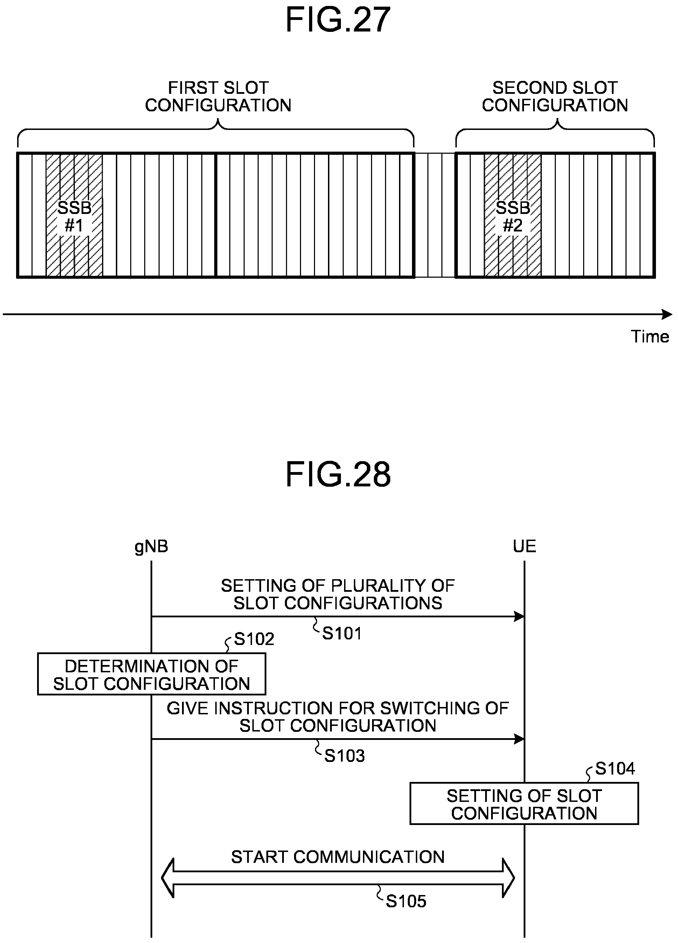

FIG. 27 is a diagram for explaining an example of a setting notification method using a detection timing of the SSB by the base station device 60 according to the embodiment of the present disclosure. FIG. 27 illustrates an example in which the base station device 60 provides notification of a first slot configuration and a second slot configuration using the detection timing of the SSB.

In the example illustrated in FIG. 27, the first slot configuration and the second slot configuration have the same number of symbols per one slot as fourteen but start positions of slots are different.

In the example illustrated in FIG. 27, detection positions of the SSB in the slots are fixed in the first slot configuration and the second slot configuration. For example, in the first slot configuration, an SSB#1 is arranged at a third symbol from the start position of the slot. Similarly, in the second slot configuration, an SSB#2 is disposed at a third symbol from the start position of the slot.

As explained above, in the example illustrated in FIG. 27, the detection positions of the SSB with respect to the start positions of the slots are fixed in the first slot configuration and the second slot configuration. Since the start positions of the slots are different in the first slot configuration and the second slot configuration, the base station device 60 transmits the SSB at different transmission timings respectively in the first slot configuration and the second slot configuration. In other words, the base station device 60 aperiodically transmits the SSB.

The terminal device 40 recognizes the slot configurations based on timing of a detected SSB. Here, for example, the terminal device 40 recognizes that timing three symbols before the detected SSB is a start position of a slot.

Note that a section in which the SSB is periodically transmitted or the number of times of the SSB is periodically transmitted may be defined. For example, at least the SSB is transmitted at a constant period in a predetermined number of times or within a predetermined section. A transmission period of the SSB may be different in a predetermined number of times or more or outside the predetermined section. Since the SSB is transmitted at the constant period as explained above, the terminal device 40 can perform soft synthesis of the SSB transmitted at the constant period and can improve detection accuracy of the SSB.

Note that, here, the base station device 60 provides notification of the setting of the slot configuration and/or the symbol configuration using the SSB (an SS/PBCH block). However, the base station device 60 may not provide notification of the setting using all signals of the SSB. Examples of a signal used by the base station device 60 for notification of setting include the following signals.
- Synchronization signal (SS)
- Tracking reference signal (TRS)
- CSI-RS
- Demodulation reference signal (DMRS) of a terminal device common PDCCH
- Wake-up signal to the terminal device 40
- Preamble signal incidental to the head of transmission
- Other synchronization signals or reference signals for detecting a frame and/or symbol timing

The signals described above may be combined to provide notification of the setting of the slot configuration and/or the symbol configuration.

Note that, in implementing the embodiment explained above, it is unnecessary to introduce the SSB in RAT of the 6G. The embodiment may be implemented using another physical signal and/or physical channel having a part of the functions of the SSB. An example of the other physical signal having a part of the functions of the SSB is a physical signal or a physical channel capable of downlink time synchronization between the base station device 60 and the terminal device 40.

### <3.3. Relation with a plurality of slot configurations and/or symbol configurations>

Each of slot configurations and/or symbol configurations can be set in correlation with other settings. For example, the base station device 60 can correlate other settings or SSBs notification of which is provided by an RRC and the slot configurations and/or the symbol configurations using the RRC Setup or the setting notification by the SSB explained above. In the following explanation, examples of other settings and elements correlated with the slot configurations and/or the symbol configurations are enumerated.

### (BWP)

As a specific example correlated with the slot configurations and/or the symbol configurations, there is a BWP. Different slot configurations and/or symbol configurations may be set for different BWPs. In this case, it is preferable that notification of setting of the slot configurations and/or the symbol configurations is provided by RRC signaling while being linked with BWP setting.

### (Configured grant)

As another specific example correlated with the slot configurations and/or the symbol configurations, there is a configured grand. Different slot configurations and/or symbol configurations can be set for different configured grant resources. In this case, it is preferable that notification of the setting of the slot configurations and/or the symbol configurations is provided by RRC signaling while being linked with the configured grant setting.

### (SPS)

As another specific example correlated with the slot configurations and/or the symbol configurations, there is an SPS. Different slot configurations and/or symbol configurations can be set for different SPS resources. In this case, it is preferable that notification of the setting of the slot configurations and/or the symbol configurations is provided by RRC signaling while being linked with the SPS setting.

### (C-DRX)

As another specific example correlated with the slot configurations and/or the symbol configurations, there is a C-DRX. Different slot configurations and/or symbol configurations can be applied to C-DRX setting and a second C-DRX (a C-DRX secondary group). In this case, it is preferable that notification of the setting of the slot configurations and/or the symbol configurations is provided by RRC signaling while being linked with the C-DRX setting.

### (Traffic Type)

As another specific example correlated with the slot configurations and/or the symbol configurations, there is a traffic type. Different slot configurations and/or symbol configurations are applied to different traffic types (for example, data of different 5QIs (5G QoS identifiers) or physical shared channels of different priority indexes).

### (Priority level)

As another specific example correlated with the slot configurations and/or the symbol configurations, there is a priority level. When priority levels are set to a slot configuration and/or a symbol configuration, and a plurality of slot configurations and/or symbol configurations are simultaneously set for the same cell/frequency band, a slot configuration and/or the symbol configuration having the highest priority level is applied.

### (Cell (and/or TRP))

As another specific example correlated with the slot configurations and/or the symbol configurations, there is a cell (and/or a TRP (Transmission and Reception Point)). Different cells can provide different slot configurations and/or symbol configurations. Different TRPs can provide different slot configurations and/or symbol configurations.

In this case, settings concerning different slot configurations and/or symbol configurations are preferably provided while being included in system related signaling but may be provided by dedicated RRC signaling. It is preferable that information concerning setting switching of the slot configurations and/or the symbol configurations is provided at the time of handover or Scell addition.

### (Link)

As another specific example correlated with the slot configurations and/or the symbol configurations, there is a link (Uplink, downlink, or sidelink). Different slot configurations and/or symbol configurations can be applied to uplink, downlink, and sidelink.

### (Physical channel)

As another specific example correlated with the slot configurations and/or the symbol configurations, there is a physical channel. For example, different slot configurations and/or symbol configurations can be applied in a Physical Control Channel (a PDCCH or a PUCCH) and a Physical Shared Channel (a PDSCH or a PUSCH).

### <3.4. Switching of different slot configurations and/or symbol configurations>

When a plurality of slot configurations and/or symbol configurations are set, one appropriate slot configuration and/or symbol configuration is applied according to a state of communication or the like. That is, the communication device can perform communication by switching the plurality of different and/or symbol configurations in the following explanation. In the following explanation, a switching method in the case in which different slot configurations and/or symbol configurations are set is explained.

### (Switching by a BWP)

When a BWP and setting of a slot configuration and/or a symbol configuration are linked, the communication device can also switch the setting of the slot configuration and/or the symbol configuration based on switching of an active BWP.

The active BWP is switched based on an instruction by a Bandwidth part indicator included in DCI (a DCI format 0_1 and a DCI format 1_1), expiration of a BWP timer, an instruction by RRC Setup, or the like. The slot configuration and/or the symbol configuration is also switched together with the switching instruction for the active BWP.

Note that timing when the BWP is switched and timing when the slot configuration and/or the symbol configuration is switched may be the same or may be different. For example, the slot configuration and/or the symbol configuration may be switched before a slot in which the BWP is switched. Calculation of a timeline from reception to transmission may be changed at timing when the slot configuration and/or the symbol configuration is switched.

### (Switching by a DCI instruction)

For example, a slot configuration and/or a symbol configuration is switched based on a DCI instruction. As an example, the slot configuration and/or the symbol configuration is switched based on the information concerning a field included in DCI. As another example, the slot configuration and/or the symbol configuration is switched based on a type of received DCI.

### (Switching by a physical parameter of an SSB)

A slot configuration and/or a symbol configuration is switched based on a physical parameter of an SSB.

The slot configuration and/or the symbol configuration is switched based on reception timing of the SSB as an example of the physical parameter of the SSB. The terminal device 40 can detect a start position of a slot from the reception timing of the SSB and switch the slot configuration and/or the symbol configuration. That is, it can be said that the base station device 60 provides notification of the switching of the slot configuration and/or the symbol configuration by differentiating transmission timing of the SSB.

The slot configuration and/or the symbol configuration is switched based on a reception period of the SSB as another example of the physical parameter of the SSB. If the number of slots with respect to a period of the SSB is fixed, the terminal device 40 can recognize the length of a slot from the reception period of the SSB. That is, it can be said that the base station device 60 provides notification of the switching of the slot configuration and/or the symbol configuration by differentiating a transmission period of the SSB.

The slot configuration and/or the symbol configuration is switched based on the length of the SSB as another example of the physical parameter of the SSB. If the number of symbols of the SSB is fixed, the terminal device 40 can recognize a symbol length from the length of the SSB. That is, it can be said that the base station device 60 provides notification of the switching of the slot configuration and/or the symbol configuration by differentiating the length of the SSB.

### (Switching by a Timer)

A slot configuration and/or a symbol configuration is switched based on a timer corresponding to the switching of the slot configuration and/or the symbol configuration. As a specific example, when the timer starts at timing when the slot configuration and/or the symbol configuration is switched and the timer expires, the slot configuration and/or the symbol configuration returns to a default slot configuration and/or symbol configuration.

This switching by the timer is preferably applied together with the other switching methods (for example, the switching by the BWP and the switching by the DCI instruction). The timer used for this switching may be the same as other timers (for example, a bwp-InactivityTimer). Alternatively, a separate timer (for example, a slotConfig-InactivityTimer) that switches the slot configuration and/or the symbol configuration may be defined.

### (Switching by RRC Setup)

When an RRC setup (RRCSetup) message or an RRC reconfiguration (RRCReconfiguration) message is received, the slot configuration and/or the symbol configuration is switched based on RRC information included in the message. For example, the terminal device 40 switches from the slot configuration and/or the symbol configuration based on the system information to the slot configuration and/or the symbol configuration indicated by the dedicated RRC information.

### (Switching by system information)

When contents of an MIB and an SIB are changed, a slot configuration and/or a symbol configuration is switched based on information concerning the changed MIB and SIB.

### <<4. Communication processing>>

Subsequently, communication processing according to the embodiment of the present disclosure is explained. As the communication processing according to the present embodiment, two examples of a case in which the base station device 60 determines switching of a slot configuration and/or a symbol configuration and a case in which the terminal device 40 determines switching of a slot configuration and/or a symbol configuration are conceivable. Note that a case in which the communication device determines one from a different plurality of slot configurations is explained below. However, the communication device may determine one from a different plurality of symbol configurations.

### <4.1. Processing based on determination of the base station device>

FIG. 28 is a sequence chart illustrating an example of a flow of the communication processing according to the embodiment of the present disclosure. In FIG. 28, the base station device 60 is illustrated as a gNB and the terminal device 40 is illustrated as a UE. In FIG. 28, the gNB determines to switch the slot configuration and/or the symbol configuration and instructs the UE to switch the slot configuration and/or the symbol configuration.

As illustrated in FIG. 28, first, the gNB provides setting of a plurality of slot configurations (an example of configuration information) to the UE (Step S101).

Thereafter, the gNB determines a slot configuration to be applied to future communication (Step S102). Note that, although not illustrated in FIG. 28, it is also assumed that the gNB acquires, from the UE, other gNBs, and/or a core network, information necessary for determining a slot configuration to be applied to future communication. Examples of the information necessary for determining the slot configuration include capability information of the UE, communication quality, and information concerning traffic.

The gNB instructs switching of a slot configuration (Step S103). This switching instruction can include, for example, information concerning the slot configuration determined by the gNB in Step S102.

The UE that has received the switching instruction sets a slot configuration according to the instruction (Step S104). As timing when the slot configuration is set, for example, timing when the instruction to switch the slot configuration is normally received, timing when HARQ feedback to a PDSCH including the instruction to switch the slot configuration is transmitted, and timing when a message (for example, RRCReconfigurationComplete) answering that reconfiguration is normally performed for RRC reconfiguration including the switching of the slot configuration is transmitted can be assumed.

After the timing when the slot configuration is set, communication using the set slot configuration is started between the gNB and the UE (Step S105).

Note that, here, an example in which the base station device 60 (the gNB) provides notification of the switching instruction is explained. However, an entity that sends the instruction is not limited to the base station device 60. For example, a communication device that can send the instruction to the terminal device 40 may provide notification of the switching instruction. For example, instead of the base station device 60, a relay station device (not illustrated) to which the terminal device 40 is connected may provide notification of the switching instruction or another terminal device 40 communicating on a sidelink may provide notification of the instruction.

### <4.2. Processing based on determination of the terminal device>

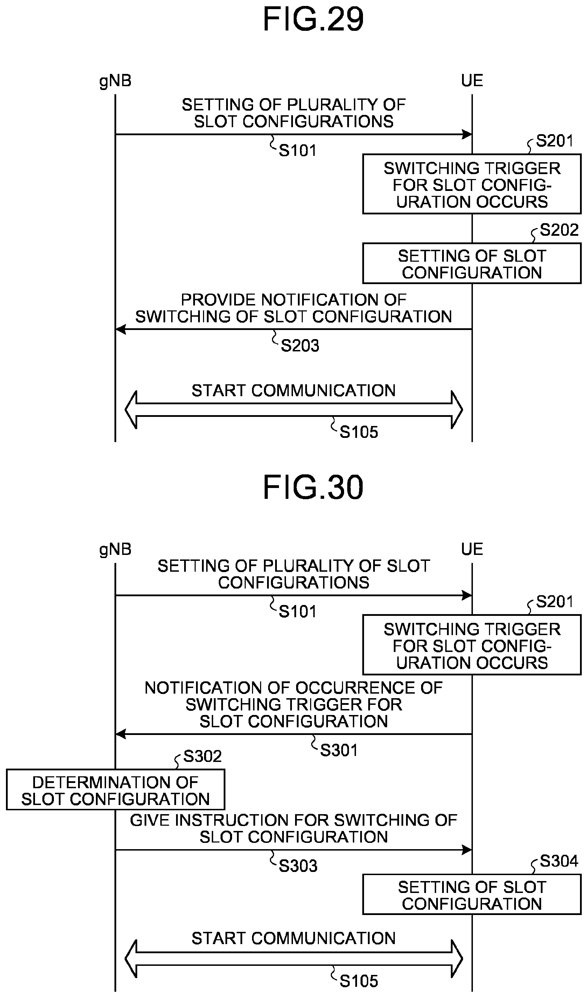

FIG. 29 is a sequence chart illustrating another example of the flow of the communication processing according to the embodiment of the present disclosure. In FIG. 29, the base station device 60 is illustrated as a gNB, and the terminal device 40 is illustrated as a UE. In FIG. 29, the UE determines to switch a slot configuration and/or a symbol configuration and notifies the gNB of the switching. Note that the same kinds processing as those in FIG. 28 are denoted by the same reference signs and explanation thereof is omitted.

When a trigger for switching a slot configuration occurs (Step S201), the UE determines to switch the slot configuration and sets the slot configuration (Step S202). Accordingly, the slot configuration is switched.

Subsequently, the UE notifies the gNB of the switching of the slot configuration (Step S203). Note that the switching notification may be transmitted to the gNB before the switching of the slot configuration by the UE or may be transmitted after the switching. When the switching notification is transmitted before the switching of the slot configuration, the slot configuration used for the notification is the slot configuration before the switching or the default slot configuration. When the switching notification is transmitted after the switching of the slot configuration, the slot configuration used for the notification may be any one of the slot configuration before the switching, the slot configuration after the switching, and the default slot configuration.

Note that, in the example illustrated in FIG. 29, the UE determines (selects) the slot configuration to be switched after the occurrence of the trigger for switching the slot configuration. However, unlike the example, processing in which the gNB determines (selects) the slot configuration to be switched can also be assumed.

FIG. 30 is a sequence chart illustrating another example of the flow of the communication processing according to the embodiment of the present disclosure. In FIG. 30, the base station device 60 is illustrated as a gNB and the terminal device 40 is illustrated as a UE. In FIG. 30, the UE determines to switch a slot configuration and/or a symbol configuration and the gNB instructs the UE to switch the slot configuration and/or the symbol configuration. Note that the same kinds of processing as those in FIG. 29 are denoted by the same reference signs and explanation thereof is omitted.

When the trigger for switching the slot configuration occurs (Step S201), the UE determines to switch the slot configuration and notifies the gNB of the occurrence of the trigger for switching the slot configuration (Step S301). In other words, the UE notifies the gNB of a request for switching the slot configuration.

The gNB that has received the notification of occurrence of the trigger for switching the slot configuration determines a slot configuration to be applied to future communication (Step S302). The gNB gives an instruction to switch the slot configuration (Step S303). The switching instruction can include, for example, information concerning the slot configuration determined by the gNB in Step S302.

The UE that has received the switching instruction sets a slot configuration according to the instruction (Step S304).

Note that, as in the case of FIG. 28, the gNB in FIG. 30 can be replaced with a relay station device or another terminal device 40 that communicates via a sidelink.

### <<5. Other embodiments>>

The embodiment explained above indicates an example. Various changes and applications of the embodiment are possible.

For example, the control device that controls the base station device 60 and the terminal device 40 in the embodiment explained above may be implemented by a dedicated computer system or may be implemented by a general-purpose computer system.

For example, a communication program for executing the operation explained above is distributed by being stored in a computer-readable recording medium such as an optical disk, a semiconductor memory, a magnetic tape, or a flexible disk. Then, for example, the control device is configured by installing the program in a computer and executing the processing explained above. At this time, the control device may be a device (for example, a personal computer) outside the base station device 60 and the terminal device 40. The control device may be a device (for example, the control units 63 and 43) inside the base station device 60 and the terminal device 40.

The communication program explained above may be stored in a disk device included in a server device on a network such as the Internet to make it possible to download the communication program to a computer. The functions explained above may be implemented by cooperation of an OS (Operating System) and application software. In this case, a portion other than the OS may be stored in a medium and distributed or the portion other than the OS may be stored in the server device to make it possible to download the portion to the computer.

Among the kinds of processing explained in the embodiment, all or a part of the processing explained as being automatically performed can be manually performed or all or a part of the processing explained as being manually performed can be automatically performed by a publiclyknown method. Besides, the processing procedures, the specific names, and the information including the various data and parameters explained in the document and illustrated in the figures can be optionally changed except when specifically noted otherwise. For example, the various kinds of information illustrated in the figures are not limited to the illustrated information.

The illustrated components of the devices are functionally conceptual and are not always required to be physically configured as illustrated in the figures. That is, specific forms of distribution and integration of the devices are not limited to the illustrated forms and all or a part thereof can be functionally or physically distributed and integrated in any unit according to various loads, usage situations, and the like. Note that this configuration by the distribution and the integration may be dynamically performed.

The embodiments explained above can be combined as appropriate in a range for not causing processing contents to contradict one another. The order of the steps illustrated in the sequence chart of the embodiment explained above can be changed as appropriate.

For example, the present embodiment can be implemented as any configuration configuring a device or a system, for example, a processor functioning as a system LSI (Large Scale Integration) or the like, a module using a plurality of processors or the like, a unit using a plurality of modules or the like, a set obtained by further adding other functions to the unit, and the like (that is, a configuration of a part of the device).

Note that, in the present embodiments, the system means a set of a plurality of components (devices, modules (components), and the like). It does not matter whether all the components are present in the same housing. Therefore, both of a plurality of devices housed in separate housings and connected via a network and one device in which a plurality of modules are housed in one housing are systems.

For example, the present embodiment can adopt a configuration of cloud computing in which one function is shared and processed by a plurality of devices in cooperation via a network.

### <<6. Conclusion>>

Although the embodiment of the present disclosure is explained above, the technical scope of the present disclosure is not limited to the embodiment per se, and various modifications can be made without departing from the gist of the present disclosure. Components in different embodiments and modifications may be combined as appropriate.

The effects in the embodiments described in this specification are only illustrations and are not limited. Other effects may be present.

Note that this technology can also take the following configurations.
(1) A communication device comprising
   a control unit that
   selects, from a plurality of slot configurations and/or a plurality of symbol configurations, a configuration of a slot and/or a symbol to be used for communication with another communication device and
   communicates with the other communication device using the selected slot configuration and/or the selected symbol configuration.
(2) The communication device according to (1), wherein the plurality of slot configurations and/or the plurality of symbol configurations are configurations in which numbers of symbols per slot are respectively different.
(3) The communication device according to (1) or (2), wherein numerologies of the plurality of slot configurations and/or the plurality of symbol configurations are same.
(4) The communication device according to any one of (1) to (3), wherein the plurality of slot configurations and/or the plurality of symbol configurations have same subcarrier spacing and/or cyclic prefix.
(5) The communication device according to any one of (1) to (5), wherein the plurality of slot configurations and/or the plurality of symbol configurations respectively have different start positions of the slot.
(6) The communication device according to any one of (1) to (6), wherein the plurality of slot configurations and/or the plurality of symbol configurations respectively have different symbol lengths.
(7) The communication device according to any one of (1) to (6), wherein the control unit notifies the other communication device of selection information concerning the selected slot configuration and/or the selected symbol configuration.
(8) The communication device according to (7), wherein the selection information is included in system information and/or dedicated RRC signaling and provided in notification.
(9) The communication device according to (7), wherein notification of the selection information is provided by using an SSB.
(10) The communication device according to (9), wherein the control unit provides notification of the selection information according to a period of the SSB or transmission timing of the SSB.
(11) The communication device according to any one of (1) to (10), wherein each of the plurality of slot configurations and/or the plurality of symbol configurations are correlated with at least one of a BWP, a configured grant, an SPS, a C-DRX, a traffic type, a priority level, a cell, a communication link, and a physical channel.
(12) The communication device according to any one of (1) to (11), wherein the slot configuration and/or the symbol configuration is switched according to the communication.
(13) The communication device according to any one of (1) to (12), wherein the control unit selects, based on notification from the other communication device, a configuration of at least one of the slot and the symbol to be used for the communication.
(14) The communication device according to any one of (1) to (13), wherein the control unit notifies the other communication device of configuration information concerning the plurality of slot configurations and/or the plurality of symbol configurations.
(15) The communication device according to any one of (1) to (6), wherein the control unit
   acquires, from the other communication device, selection information concerning a configuration of the slot and/or the symbol to be used for the communication and
   selects, based on the acquired selection information, a configuration of the slot and/or the symbol to be used for the communication.
(16) A communication method comprising:
   selecting, from a plurality of slot configurations and/or a plurality of symbol configurations, a configuration of a slot and/or a symbol to be used for communication with another communication device; and
   communicating with the other communication device using the selected slot configuration and/or the selected symbol configuration.
(17) A communication system comprising a first communication device and a second communication device, wherein
   the first communication device includes a control unit that selects, from a plurality of slot configurations and/or a plurality of symbol configurations, a configuration of a slot and/or a symbol to be used for communication with the second communication device and communicates with the second communication device using the selected slot configuration and/or the selected symbol configuration, and
   the second communication device includes a control unit that acquires selection information concerning the slot configuration and/or the symbol configuration selected by the first communication device and communicates with the first communication device using the acquired slot configuration and/or the acquired symbol configuration. Reference Signs List

1 COMMUNICATION SYSTEM
40 TERMINAL DEVICE
41, 61 WIRELESS COMMUNICATION UNIT
42, 62 STORAGE UNIT
43, 63 CONTROL UNIT
60 BASE STATION DEVICE

## Claims

1. A communication device comprising
a control unit that
selects, from a plurality of slot configurations and/or a plurality of symbol configurations, a configuration of a slot and/or a symbol to be used for communication with another communication device and
communicates with the other communication device using the selected slot configuration and/or the selected symbol configuration.

2. The communication device according to claim 1, wherein the plurality of slot configurations and/or the plurality of symbol configurations are configurations in which numbers of symbols per slot are respectively different.

3. The communication device according to claim 1, wherein numerologies of the plurality of slot configurations and/or the plurality of symbol configurations are same.

4. The communication device according to claim 1, wherein the plurality of slot configurations and/or the plurality of symbol configurations have same subcarrier spacing and/or cyclic prefix.

5. The communication device according to claim 1, wherein the plurality of slot configurations and/or the plurality of symbol configurations respectively have different start positions of the slot.

6. The communication device according to claim 1, wherein the plurality of slot configurations and/or the plurality of symbol configurations respectively have different symbol lengths.

7. The communication device according to claim 1, wherein the control unit notifies the other communication device of selection information concerning the selected slot configuration and/or the selected symbol configuration.

8. The communication device according to claim 7, wherein the selection information is included in system information and/or dedicated RRC signaling and provided in notification.

9. The communication device according to claim 7, wherein notification of the selection information is provided by using an SSB.

10. The communication device according to claim 9, wherein the control unit provides notification of the selection information according to a period of the SSB or transmission timing of the SSB.

11. The communication device according to claim 1, wherein each of the plurality of slot configurations and/or the plurality of symbol configurations are correlated with at least one of a BWP, a configured grant, an SPS, a C-DRX, a traffic type, a priority level, a cell, a communication link, and a physical channel.

12. The communication device according to claim 1, wherein the slot configuration and/or the symbol configuration is switched according to the communication.

13. The communication device according to claim 1, wherein the control unit selects, based on notification from the other communication device, a configuration of at least one of the slot and the symbol to be used for the communication.

14. The communication device according to claim 1, wherein the control unit notifies the other communication device of configuration information concerning the plurality of slot configurations and/or the plurality of symbol configurations.

15. The communication device according to claim 1, wherein the control unit
acquires, from the other communication device, selection information concerning a configuration of the slot and/or the symbol to be used for the communication and
selects, based on the acquired selection information, a configuration of the slot and/or the symbol to be used for the communication.

16. A communication method comprising:
selecting, from a plurality of slot configurations and/or a plurality of symbol configurations, a configuration of a slot and/or a symbol to be used for communication with another communication device; and
communicating with the other communication device using the selected slot configuration and/or the selected symbol configuration.

17. A communication system comprising a first communication device and a second communication device, wherein
the first communication device includes a control unit that selects, from a plurality of slot configurations and/or a plurality of symbol configurations, a configuration of a slot and/or a symbol to be used for communication with the second communication device and communicates with the second communication device using the selected slot configuration and/or the selected symbol configuration, and
the second communication device includes a control unit that acquires selection information concerning the slot configuration and/or the symbol configuration selected by the first communication device and communicates with the first communication device using the acquired slot configuration and/or the acquired symbol configuration.
